# FASCICULE DE BREVET EUROPEEN

(11) **EP 2 516 123 B1**
(45) Date de publication et mention de la délivrance du brevet: **02.03.2016**
(21) Numéro de dépôt: 10790856.8
(22) Date de dépôt: 20.12.2010
(51) Int. Cl.: B29C 33/30, B29C 49/56, B29C 49/48, B29C 49/06, B29C 49/10, B29C 49/36

(54) **MACHINE POUR LA FABRICATION DE RÉCIPIENTS COMPORTANT UN SYSTÈME D'ASSISTANCE AU CHANGEMENT DE MOULE**
MASCHINE ZUR HERSTELLUNG VON BEHÄLTERN MIT EINEM HILFSSYSTEM BEIM WECHSELN VON FORMEN
MACHINE FOR MANUFACTURING CONTAINERS, INCLUDING A SYSTEM FOR PROVIDING ASSISTANCE WHEN CHANGING MOULDS

(30) Priorité: 21.12.2009 FR 0959305
(43) Date de publication de la demande: 31.10.2012
(73) Titulaire: Sidel Participations, 76930 Octeville sur Mer (FR)
(72) Inventeur: DUCLOS, Yves-Alban, F-76930 Octeville Sur Mer (FR); BLANCHARD, José, F-76930 Octeville Sur Mer (FR); HAZARD, Stéphane, F-76930 Octeville Sur Mer (FR); BUREL, Fabrice, F-76930 Octeville Sur Mer (FR); LEFRANC, Cyrille, F-76930 Octeville Sur Mer (FR); CHEREAU, Roland, F-76930 Octeville Sur Mer (FR)
(74) Mandataire: Gevers & Orès
(86) Numéro de dépôt international: PCT/EP2010/070201
(87) Numéro de publication internationale: WO 2011/076714

(56) Documents cités:
- FR-A1- 2 646 802
- US-A1- 2004 104 517

## Description

La présente invention concerne une machine pour la fabrication de récipients comportant un système d'assistance au changement de moule.

La présente invention concerne plus particulièrement une machine de fabrication de récipients qui comporte au moins une unités de moulage comportant :
- au moins deux porte-moules qui sont montés mobiles entre une position ouverte et une position fermée de l'unité de moulage et un moule comportant au moins deux éléments de moulage fixés chacun de manière démontable à l'un des porte-moules, et
- un dispositif de verrouillage de l'unité de moulage comportant au moins un organe de commande apte à actionner des moyens de verrouillage qui sont montés mobiles entre :
   - une position verrouillée dans laquelle les porte-moules de l'unité de moulage sont maintenus en position fermée par lesdits moyens de verrouillage, et
   - une position déverrouillée dans laquelle les porte-moules sont libres d'être déplacés entre les positions fermée et ouverte.

On connaît de l'état de la technique des machines de fabrication de récipients, en particulier due bouteilles en matière thermoplastique, lesdites machines étant notamment, mais non exclusivement, des machines dites "rotatives".

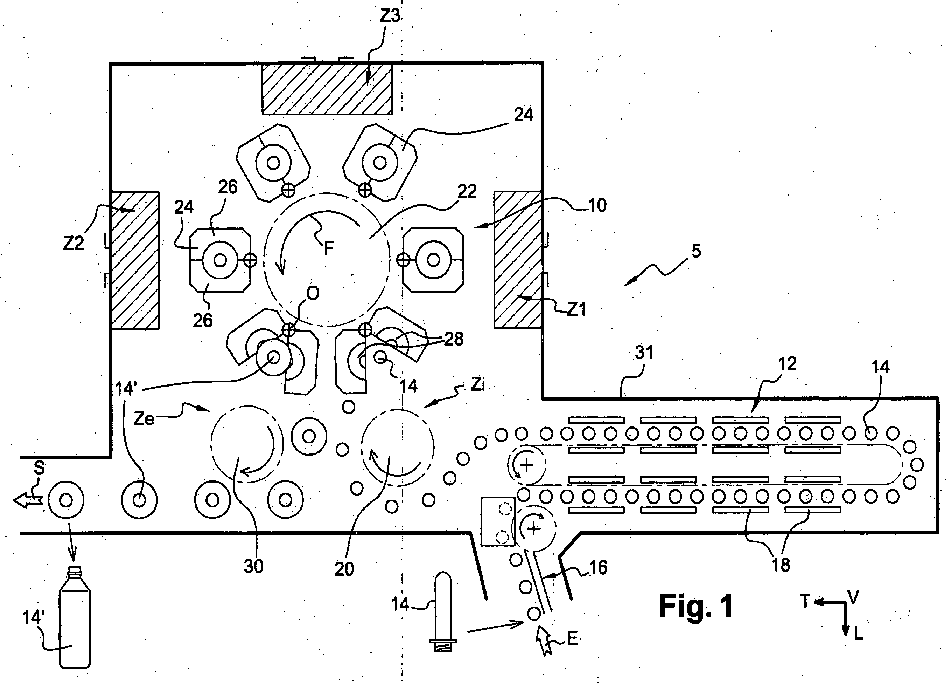

On a représenté sur la figure 1 à titre d'exemple non limitatif, une installation 5 selon l'état de la technique comportant une machine 10 de fabrication de récipients de type rotative, instillation 5 dans laquelle ladite machine 10 (encore appelée "souffleuse") est notamment associée à un four 12 de conditionnement thermique des préformes 14.

L'installation 5 comporte un dispositif 16 d'alimentation en préformes 14 (ou ébauches) qui sont introduites dans l'installation par une entrée E qui communique avec une zone d'entrée du four 12.

Le four 12 comporte des moyens 18 de chauffage des préformes 14 qui sont agencés sur tout ou partie d'un parcours, ici en "U", s'étendant de la zone d'entrée du four dans laquelle les préformes 14 sont amenées par le dispositif 16 d'alimentation à une zone de sortie du four 12 au voisinage de laquelle est agencé un premiers dispositif 20 de transfert.

Le premier dispositif 20 de transfert est destiné à transférer les préformes 14 conditionnées thermiquement depuis la zone de sortie du four 12 jusqu'à une zone Zi, dite d'introduction, des préformes 14 dans la machine 10 de fabrication.

La machine 10 de fabrication comporte un carrousel 22 équipé d'une série d'unités 24 de moulage réparties circonférentiellement et des moyens de soufflage ou d'étirage-soufflage (non représentés) associés auxdites unités 24.

L'unité 24 de moulage comporte deux porte-moules 26, qui sont montés mobiles entre une position ouverte et une position fermée de l'unité de moulage, par exemple lorsque 1'unité.24 de moulage est de type "portefeuille" tel qu'illustré à la figure 1, les porte-mo.ules 26 (en variante au moins l'un) sont montés mobiles en rotation l'un par rapport à l'autre autour d'un axe O de rotation.

Chaque unité 24 de moulage comporte un moule comportant au moins deux éléments 28 de moulage fixés chacun de manière démontable à l'un des porte-moules 26.

En position fermée de l'unité 24 de moulage, les éléments 28 de moulage sont accolés de manière que leurs fasces internes - définissent un plan de joint, la réunion de chacune de leur demi-empreinte de moulage définissant le volume, la forme, l'aspect, etc. du récipient à obtenir par formage d'une préforme.

Une telle machine 10 de fabrication est susceptible de fonctionner selon différents modes de fonctionnement.

Selon un mode de fonctionnement de la machine, dit de production, la machine 10 est utilisée conjointement au four 12 de l'installation 5 pour la fabrication de récipients.

Dans un tel mode de fonctionnement de la machine 10, le carrousel 22 est entraîné en rotation de manière que chaque unité 24 de moulage parcourt un cycle de transformation depuis ladite zone si d'introduction jusqu'à une zone Ze, dite d'évacuation, des récipients 14' dans laquelle un deuxième dispositif 30 de transfert est agencé.

Le deuxième dispositif 30 de transfert est destiné à transférer les récipients 14', obtenus à partir des préformes 14, depuis la zone Ze d'évacuation de la machine 10 jusqu'à une sortie S de l'installation 5.

Comme l'illustre la figure 1, les zones d'introduction des préformes 14 et d'évacuation des récipients 14' sont adjacentes et situées dans la partie avant de la machine 10 de sorte que le cycle de transformation est réalisé sur la quasi-totalité de la circonférence de la machine.

L'installation 5 comporte généralement une enceinte 31 de protection disposée de manière à entourer au moins la machine 10 de fabrication et le four 12.

En mode de production de la machine 10 illustré par la figure 1, la fabrication de récipients en matière plastique, tels que des bouteilles, flacons, etc. est donc effectuée dans les unités 24 de moulage par soufflage ou par étirage-soufflage de préformes 14 préalablement chauffées dans le four 12 de conditionnement thermique.

Toutefois, si le mode de production constitue le principal mode de fonctionnement de la machine, la machine 10 présente également un autre mode de fonctionnement, dit d'intervention, qui est tout aussi important.

En effet, lesdits au moins deux éléments 28 de moulage formant le moule et comportant chacun une derni-empréinte sont fixés aux porte-moules 26 par l'intermédiaire de moyens de fixation (non représentés) aptes à en permettre le démontage et le montage afin de permettre d'effectuer un changement du moule de l'unité 24 de moulage. Le document US 2004/104517 A1 décrit une machine de fabrication de récipients selon le préambule de la revendication 1.

Le document EP-B1-0.821.641 au nom de la demanderesse décrit notamment différents perfectionnements apportés tant sur la structure d'une unité 24 de moulage et du moule que sur les moyens de fixation du moule.

On se reportera avantageusement à ce document, donné toutefois uniquement à titre d'exemple non limitatif.

Un tel changement de moule est en particulier requis pour procéder à des fabrications de récipients de formes et/ou de dimensions différentes ou encore à leur remplacement en cas d'endommagement et/ou d'usure des éléments de moulage.

En fonction de l'utilisation de la machine 10, le mode de fonctionnement, dit d'intervention, au cours duquel la production de récipient par la machine est arrêtée, est plus ou moins fréquemment mis en oeuvre.

Dans certains cas, les changements de moule sont très fréquents de sorte qu'une attention encore plus grande est alors portée au temps nécessaire pour procéder au changement du moule d'une unité 24 de moulage.

Or, la durée requise pour procéder au changement d'un moule est à multiplier par le nombre d'unités 24 de moulage que comporte la machine 10, lequel nombre, est par exemple compris entre 6 et 34 unités de moulage.

Les opérations requises pour lé changement du moule d'une unité 24 de moulage sont nombreuses et toutes réalisées manuellement par un opérateur, parfois deux opérateurs, de sorte que la durée d'intervention est souvent jugée trop longue par les utilisateurs, en particulier en cas de changements fréquents.

Eu effet, l'immobilisation de la machine 10 durant ces opérations présente un coût important du fait de l'arrêt complet de la fabrication qui l'accompagne, les opérations de changement de moule, plus ou moins fréquentes selon les utilisateurs, sont par conséquent très coûteuses car longues et complexes.

La présente invention a notamment pour but de résoudre les inconvénients précités et vise tout particulièrement à réduire la durée nécessaire au changement du moule d'une unité de moulage tout en améliorant les conditions générales en mode d'intervention de la machine, et cela tant sur le plan de la sécurité que de l'ergonomie.

Dans ce but, l'invention propose un système d'assistance, au changement de moulé apte à être mis sélectivement dans une état d'utilisation associé au mode de fonctionnement de la machine, dix d'intervention, ledit mode étant notamment destiné à permettre à au moins un opérateur de procéder au changement de moule de tout ou partie des unités de moulage de la machine.

Selon l'invention la machine pour la fabrication de récipients du type décrit précédemment est caractérisée en ce que la machine comporte un système d'assistance au changement de moule susceptible d'occuper au moins un état de veille associé à un mode de fonctionnement de la machine, dit de production, pour la fabrication de récipients par la machine, et un état d'utilisation associé à un autre mode de fonctionnement de la machine, dit d'intervention, pour procéder au moins au changement du moule de ladite au moins une unité de moulage, ledit système comportant au moins un module associé à ladite au moins une unité de moulage, ledit module comportant un dispositif d'actionnement qui comporte un organe de manoeuvre destiné à coopérer avec ledit organe de commande des moyens de verrouillage lorsque l'unité de moulage occupe une position de référence déterminée par rapport au module, ledit organe de manoeuvre étant apte à être entraîné en déplacement afin d'actionner ledit organe de commande des moyens de verrouillage, d'une part, pour provoquer le déplacement des moyens de verrouillage vers au moins l'une desdites positions verrouillée ou déverrouillée et, d'autre part, pour provoquer le déplacement des porte-moules vers au moins l'une desdites positions ouverte ou fermée de l'unité de moulage.

Avantageusement, le système selon l'invention permet de supprimer toute intervention manuelle d'un opérateur et cela tant pour réaliser le déverrouillage que l'ouverture de l'unité de moulage afin de permettre de procéder au changement du moule de ladite unité, c'est à dire aux opérations de démontage et montage des éléments de moulage.

Grâce à l'invention, la durée nécessaire à la mise en oeuvre des opérations de changements des moules est considérablement réduite par rapport au temps requis auparavant pour réaliser ces mêmes opérations.

Avantageusement, le système selon l'invention participe à la réduction de la pénibilité pour l'opérateur de telles opérations qui sont fatigantes, répétitives et mises en oeuvres dans un environnement présentant souvent peu d'ergonomie.

Avantageusement, le système comporte un nombre (n) de modules qui est supérieur ou égal à deux de manière à traiter simultanément autant d'unité de moulage associée chacun à un module, grâce à quoi on réduit encore de manière très conséquente la durée tôtale requise au changement des moules de tout ou partie des unités de moulage d'une machine.

Selon d'autres caractéristiques de l'intention
- le dispositif d'actionnement du module du système comporte des premiers moyens d'entraînement destinés à déplacer sélectivement l'organe de manoeuvre entre au moins :
   - une première position associée à la position verrouillée des moyens de verrouillage de l'unité de moulage, et
   - une deuxième position associée à la position déverrouillée des moyens de verrouillage de l'unité de moulage ;
- l'organe de manoeuvre est apte à être déplâcé en translation par lesdits premiers moyens d'entraînement au moins :
   - de ladite première position dans laquelle ledit organe de manoeuvre coopère avec l'organe de commandé des moyens de verrouillage occupant la position verrouillée
   - vers ladite deuxième position dans laquelle ledit organe de manoeuvre exerce sur l'organe de commande des moyens de verrouillage un effort, dit de déverrouillage, propre à amener lesdits moyens de verrouillage en position déverrouillée ;
- l'organe de manoeuvre est apte à être déplacé en translation par lesdits premiers moyens d'entraînement au moins :
   - de ladite deuxième position dans laquelle ledit organe de manoeuvre coopère avec l'organe de commande des moyens de verrouillage occupant la position déverrouillée,
   - a vers ladite première position dans laquelle ledit organe de manoeuvre exerce sur l'organe de commande des moyens de verrouillage un effort, dit de verrouillage, propre à amener lesdits moyens de verrouillage en position verrouillée ;
- le dispositif d'actionnement du module du système comporte des deuxièmes moyens d'entraînement destinés à déplacer l'organe de manoeuvre entre au moins :
   - ladite deuxième position dans laquelle les porte-mo.ules de l'unité de moulage sont en position fermée et dans laquelle les moyens de verrouillage sont en position déverrouillée, et
   - une troisième position dans laquelle les porte-moules de l'unité de moulage sont en position ouverte ;
- l'organe de manoeuvre est apte à être déplacé en rotation par lésdits deuxièmes moyens d'entraînement au moins :
   - de ladite deuxième position dans laquelle ledit ,organe de manoeuvre sollicite l'organe de commande des moyens de verrouillage en position déverrouillée,
   - vers une troisième position atteinte après que ledit organe de manoeuvre ait appliqué à l'organe de commande un effort, dit d'ouverture, propre à provoquer le déplacement d'au moins l'un des porte-moules de manière que les porte-moules occupent ladite position ouverte de l'unité de montage ;
- l'organe de manoeuvré est apte à être déplacé en rotation par lesdits deuxièmes moyens d'entraînement au moins :
   - de ladite troisième position,
   - vers ladite deuxième position atteinte après que ledit organe de manoeuvré ait appliqué à l'organe de commande un effort, dit de fermeture, propre à provoquer le déplacement d'au moins l'un des porte-moules de manière que les porte-moules occupent ladite position fermée de l'unité de moulage ;
- l'organe de manoeuvre du module du système est apte à pivoter, entre lesdites deuxième et troisième positions, autour d'un axe de rotation qui est coaxial avec un axe de rotation autour duquel l'un au moins des porte-moules est monté mobile en rotation, respectivement entre lesdites positions ouverte et fermée de 1,'unité de moulage occupant ladite position de- référence déterminée par rapport au module ;
- l'organe de manoeuvre du dispositif d'actionnement dudit au moins un module du système est monté mobile entre au moins:
   - une position escamotée correspondant à un état de veille du système associé à un mode de fonctionnement de la machine, dit de production, pour la fabrication de récipients par la machine, et
   - ladite première position correspondant à un état d'utilisation du système associé à un autre mode de fonctionnement de la machine, dit d'intervention, pour procéder au moins au changement du moule d'au moins une unité de moulage,
   et les premiers moyens d'entraînement' d'au moins ledit organe de manoeuvre constituent des moyens de commande du changement d'état du système entre lesdits états de veille et d'utilisation ;
- le système comporte une unité de commande destinée à commander au moins un module, ladite unité étant apte à commander sélectivement et séquentiellement selon un cycle de changement de moule au moins lesdits premiers et deuxièmes moyens d'entraînement du dispositif d'actionnement du module du système en état d'utilisation, ledit cycle comportant au moins :
   - une première phase de cycle au cours de laquelle l'organe de manoeuvre du dispositif d'actionnement est successivement déplacé de la première position à la deuxième position puis de ladite deuxième position à la troisième position, et
   - une deuxième phase de cycle au cours de laquelle l'organe de manoeuvre du dispositif d'actionnement est successivement déplacé de la troisième position à la deuxième position puis de ladite deuxième position à la première position.
- le système comporte au moins deux modules juxtaposés et agencés dans une zone déterminée de la machine, dite zone d'intervention ;
- le système comporte au moins deux modules séparés et agencés chacun dans une zone déterminée d'intervention de la machine ;
- le système comporte respectivement :
   - des premiers moyens de liaison qui lient en déplacement les organes de manoeuvre d'au moins deux modules dont les premiers moyens d'entraînement communs agissent sur lesdits premiers moyens de liaison, et
   - des deuxièmes moyens de liaison qui lient en déplacement lesdits organes de manoeuvre desdits au moins deux modules dont les deuxièmes moyens d'entraînement communs sont aptes à agir sur lesdits deuxièmes moyens de liaison ;
- le système comporte respectivement:
   - des premiers moyens de liaison qui lient en déplacement les organes de manoeuvre d'au moins deux modules dont les premiers moyens d'entraînement distinctes sont aptes à agir sélectivement sur l'organe de manoeuvre de chacune desdits modules, et
   - des deuxièmes moyens de liaison qui lient en déplacement lesdits organes de manoeuvre desdits au moins deux modules dont les deuxièmes moyens d'entraînement communs agissent sur lesdits deuxièmes moyens de liaison;
- le système d'assistance au changement de moule comporte au moins deux modules qui sont commandés, simultanément ou successivement, par ladite unité de commande pour effectuer chacun ledit cycle de changement de moule sans changement des positions de référence déterminées des unités de moulage associées.

D'autres caractéristiques et avantages de la présente invention apparaîtront à la lecture de la description détaillée qui va suivre pour la compréhension de laquelle on se reportera aux dessins dans lesquels :
- la figure 1 est une vue de dessus qui représente schématiquement une instillation conforme à l'état de la technique comportant un exemple de machine pour la fabrication de récipients et susceptible d'être équipée d'un système d'assistance aux changements de moules selon l'invention ;

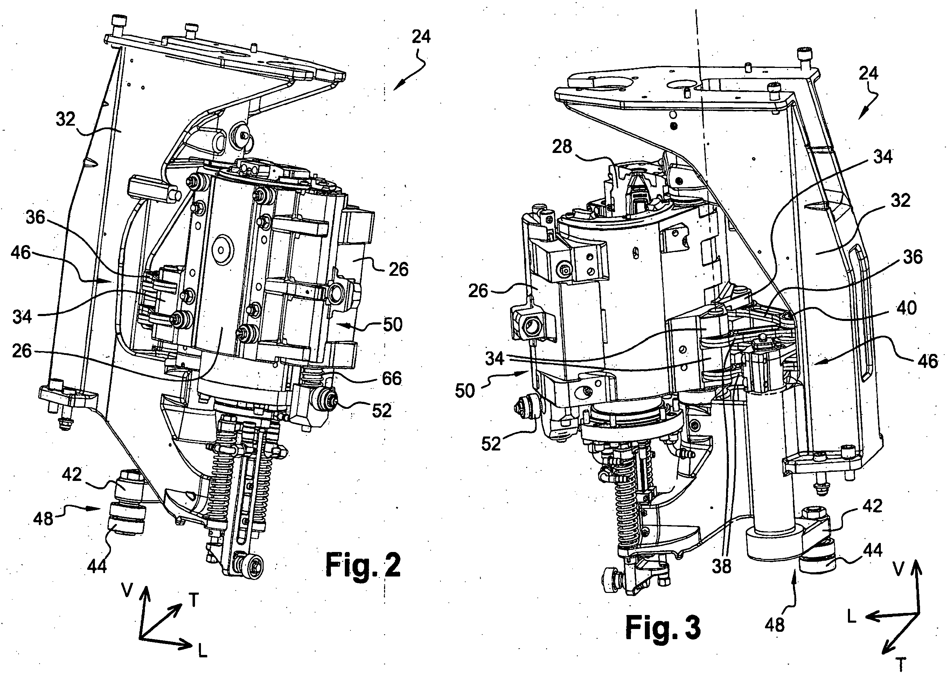

- les figures 2 et 3 sont des vues en perspective qui représentent un exemple de réalisation d'une unité de moulage destinée à équiper l'un des postes d'une machine selon la figure 1, ladite unité étant respectivement illustrée de trois quarts avant en position fermée et de trois quarts arrière en position ouverte ;

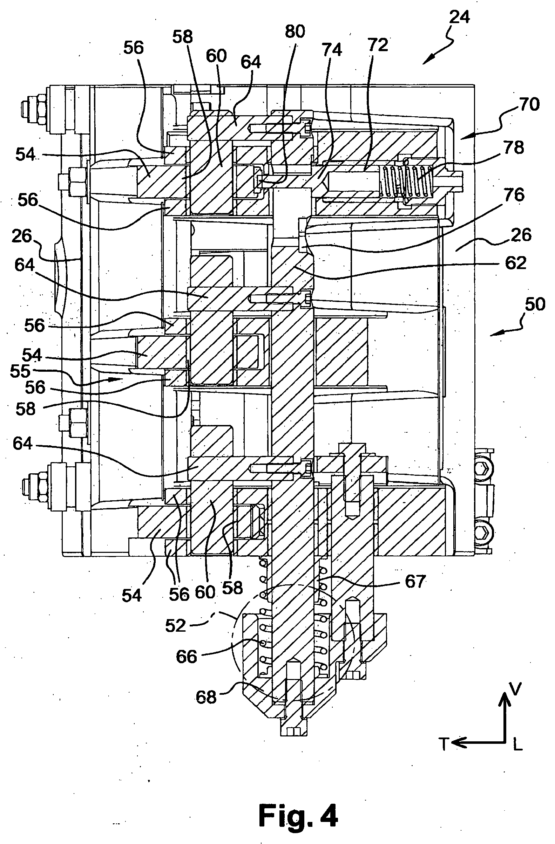

- la figure 4 est une vue en coupe qui représente en détail la structure d'un exemple de réalisation d'un dispositif de verrouillage d'une unité de moulage, ledit dispositif de verrouillage comportant un mécanisme de blocage des moyens de verrouillage en position déverrouillée, et qui illustre le dispositif de verrouillage en position verrouillée et le mécanisme de blocage associé en position inactive ;

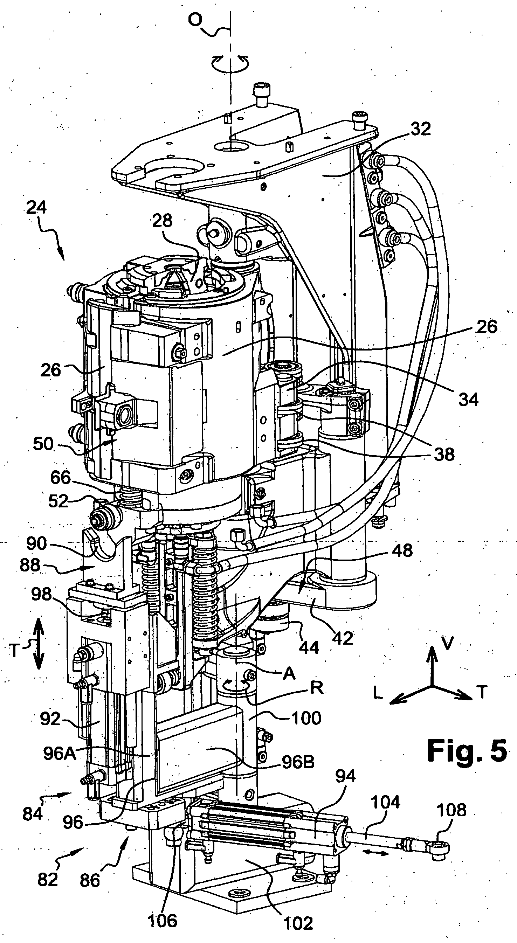

- la figure 5 est une vue en perspective qui représente une unité de moulage selon les figures 2 et 3 et un module selon un premier mode de réalisation - dit monoposte - du système d'assistance au changement de moule selon l'invention, et qui illustre ladite unité en position de référence déterminée par rapport au module et ledit système à l'état de veille, l'organe de manoeuvre du dispositif d'actionnement du module occupant une position escamotée ;

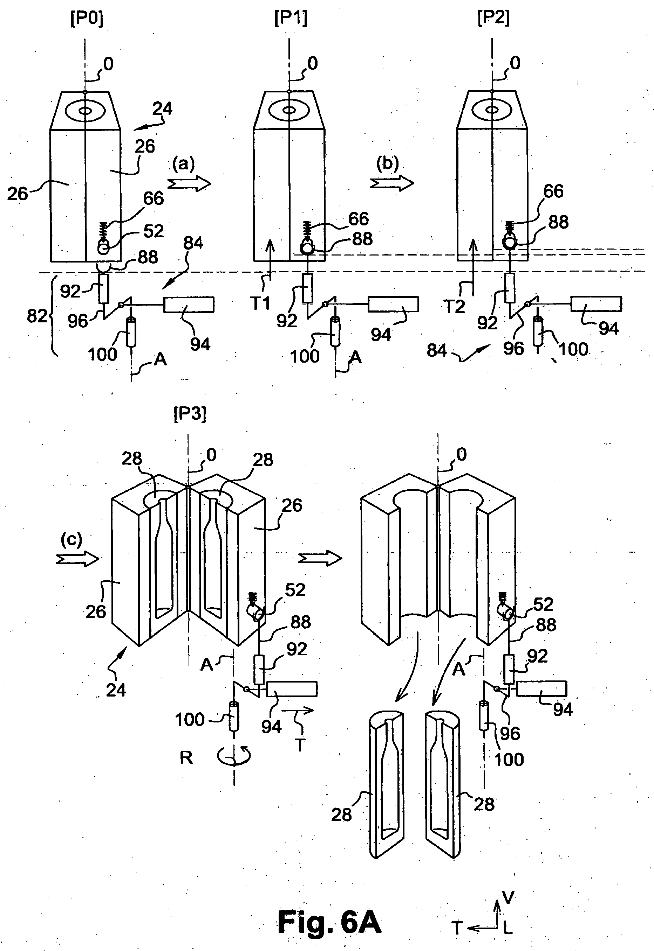

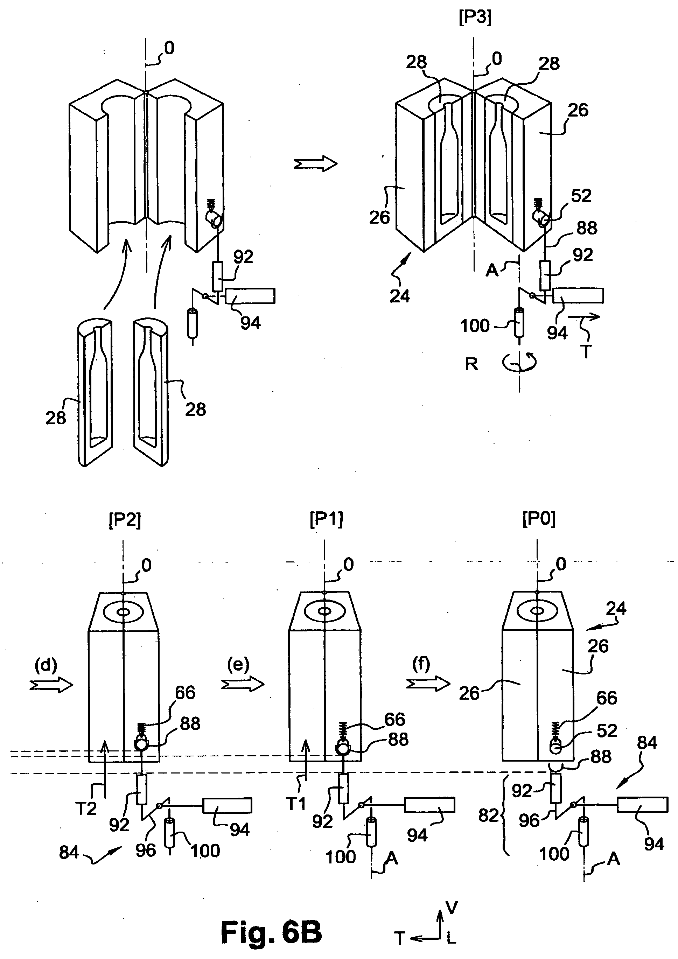

- les figures 6A et 6B sont respectivement un ensemble de vues schématiques qui représentent chacune le module d'un système selon le premier mode de réalisation et l'unité de moulage associée et qui illustrent successivement, pour la figure 6A, les étapes de la première phase du cycle et, pour la figure 6B, la deuxième phase du cycle de changement de moule ;

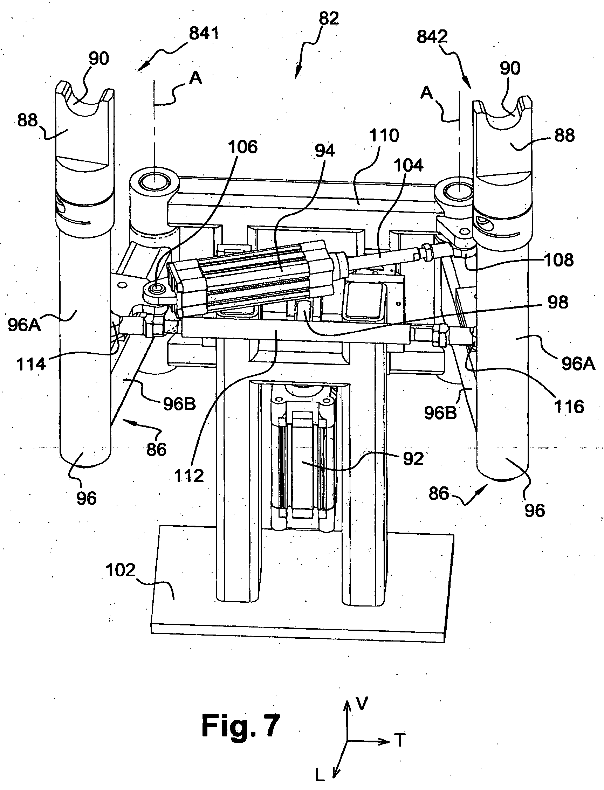

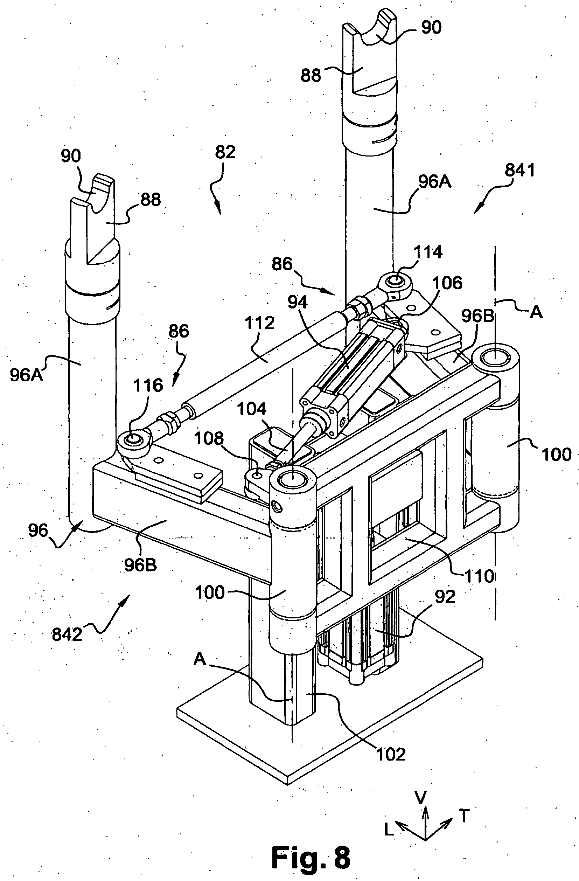

- les figures 7 et 8 sont respectivement une vue de face et une vue en perspective de trois quarts arrière qui représentent un système selon un deuxième mode de réalisation de l'invention qui comporte deux modules juxtaposés avec des premiers et des deuxièmes moyens d'entraînement communs ;

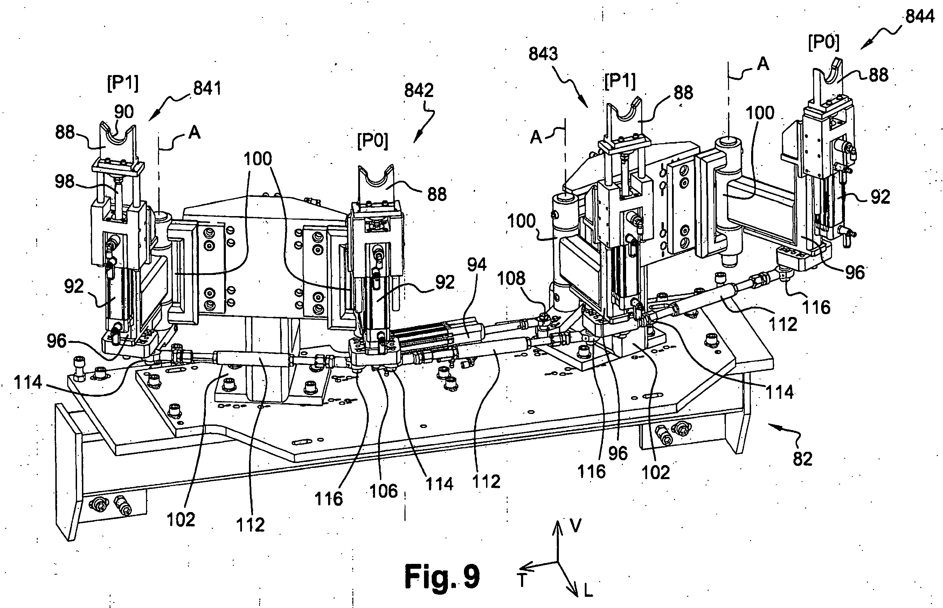

- la figure 9 est une vue en perspective qui représenta un système selon un troisième mode de réalisation de l'invention et qui illustre ledit système à quatre modules, destinés à être commandés successivement en groupe de deux.

Dans la suite de la description, on adoptera à titre non limitatif les orientations longitudinale, verticale et transversale en référence au trièdre (L, V, T) représentés sur les figures.

Par convention, les directions longitudinale et transversale sont déterminées de manière fixe par rapport aux porte-moules de sorte que la position ouverte ou fermée occupée est sans incidence sur lesdites orientations.

On utilisera également à titre non limitatif les termes "avant" et "arrière" en référence à l'orientation - longitudinale, ainsi que "supérieur" et "inférieur" en préférence à l'orientation verticale et enfin "gauche" ou "droite" en référence à l'orientation transversale.

On a représenté aux figures 2 et 3, un exemple de réalisation d'une unité 24 de moulage susceptible d'être montée sur un carrousel 22 d'une machine 10 de fabrication de récipients du type de celle représentée à la figure 1 et décrite en préambule en relation avec les modes de fonctionnement de la machine 10.

Une telle unité 24 de moulage constitue alors l'un des postes de moulage par soufflage ou par étirage-soufflage de la machine 10 qui comporte une série de "n" unités 24 de moulage, réparties angulairement de manière régulière autour du carrousel 22 de la machine 10.

S'agissant des moyens de soufflage ou d'étirage-soufflage précités, encore parfois appelés et réalisés sous la forme d'une tuyère de soufflage, on se reportera par exemple au document FR-2.764.544 pour de plus amples détails.

L'unité 24 de moulage comporte deux porte-moules 26 qui sont montés mobiles l'un par rapport à l'autre entre une position ouverte et une position fermée de l'unité de moulage.

L'unité 24 de moulage est supportée par une console 32 destinée à être rapportée à fixation sur le carrousel 22 de la machine 10.

Plus précisément, les porte-moules 26 sont constitués sous la forme de deux structures porteuses montées pivotantes autour de l'axe O de rotation, l'axe O de rotation s'étendant ici verticalement selon le trièdre (L, V, T).

En raison de la cinématique des porte-moules 26, une unité 24 de moulage de ce type est encore appelée moule "portefeuille" (*ou "book-like opening" en anglais*).

En variante, seulement l'un des porte-moules 26 est monté mobile tandis que l'autre porte-moule 26 est fixe, le porte-moule 26 mobile étant commandé en déplacement entre lesdites positions ouverte ou fermée.

• Comme on peut le voir sur la figure 3 illustrant l'unité 24 de moulage en position ouverte, l'unité 24 de moulage comporte un moule comportant au moins deux éléments 28 de moulage munis chacun d'une demi-empreinte (visible sur le demi-moule présent et en position de fixation sur le porte-moule 26).

Toutefois, lorsque le récipient à fabriquer présente un fond de forme complexe, en particulier pétaloïde, il est connu que des problèmes de démoulage sont alors susceptibles de survenir.

C'est la raison pour laquelle, on prévoit avantageusement un fond de moule séparé. Ainsi, le moule comporte alors respectivement trois éléments distincts, à savoir deux éléments 28 de moulage et un fond de moule. (non visible) comportant une empreinte du fond du récipient qui est complémentaire des demi-empreintes que comportent lesdits élément 28 de moulage.

En variante, le moule peut ne pas comporter un tel fond de moule et il est alors réalisé uniquement en deux éléments 28 de moulage.

De plus, indépendamment du point de savoir si le moule est réalisé en deux ou trois éléments avec un fond de moule, la conception des deux éléments 28 de moulage peut également différer, notamment si - outre le fait de porter une partie de l'empreinte - l'élément de moulage intègre également d'autres fonctions comme le refroidissement.

De préférence, les éléments 28 de moulage du moule sont d'une conception identique à celle qui est décrite dans le document EP-B1-0.821.641.

Dans ce document, chacun des deux éléments 28 de moulage est réalisé en deux pièces distinctes, respectivement et selon les termes utilisés dans ce document : une coquille comportant une partie de l'empreinte et un porte-coquille qui, destiné à être monté sur un porte-moule, comporte un logement dans lequel est reçu et fixé la coquille grâce à des moyens de fixation.

En conséquence, le terme "élément 28 de moulage" est utilisé dans la présente description de manière générique et englobe notamment les différentes variantes de réalisaton de moule décrites ci-dessus.

Chaque porte-moule 26 comporte des moyens d'articulation agencés en arrière selon la direction longitudinale.

De préférence, les moyens d'articulation des porte-moules 26 comportent des oreilles 34 extérieures qui, écartées de l'axe O de rotation, équipent respectivement chaque porte-moule 26.

Sur les oreilles 34 de chaque porte-moule 26 sont montées pivotantes l'une des extrémité de biellettes, respectivement d'au moins une biellette 36 pour le porte-moule 26 de gauche et d'au moins une biellette 38 pour le porte-moule 26 de droite.

L'autre extrémité de chacune des biellettes 36, 38 est raccordée à libre pivotement sur un axe 40 commun d'articulation qui est agencé longitudinalement en arrière de l'unité 24 de moulage.

Selon que l'axe 40 commun d'articulation est déplacé approximativement linéairement dans un sens, ici longitudinal, le rapprochant de l'axe O de rotation ou au contraire l'en éloignant, on provoque le rapprochement l'un de l'autre des porte-moules 26 et donc la fermeture de l'unité 24 de moulage, ou au contraire l'éloignement des porte-moules 26 l'un de l'autre et donc l'ouverture de l'unité 24 de moulage.

Les porte-moules 26 sont ainsi susceptibles de s'écarter mutuellement l'un de l'autre en pivotant autour de l'axe O de rotation respectivement entre au moins une position fermée et une position ouverte.

Pour commander ce mouvement de l'axe 40 commun d'articulation, on utilise des moyens d'actionnement, par exemple à came et à galet. De préférence, les moyens d'actionnement à came et à galet comportent des moyens à levier interposés entre la came et le gilet pour former un amplificateur de course.

Selon l'exemple de réalisation, l'axe 40 commun d'articulation est solidaire de l'extrémité d'un bras 42 de commande formant un levier et dont l'autre extrémité libre supporte des moyens suiveurs qui, formés par au moins galet 44, sont propres à coopérer avec des moyens de guidage tels qu'une came.

Les moyens d'articulation et les moyens d'actionnement associés constituent un dispositif d'ouverture/fermeture 46 de l'unité 24 de moulage comportant un organe de commande 48 formé par le bras 42 et le galet 44 qui est apte commander en déplacement les porte-moules 26 entre les positions ouverte et fermée.

A titre complémentaire, on se reportera par exemple au document FR-A1-2.843.714 qui concerne notamment des moyens de commande de ce type pour commander en ouverture/fermeture une unité de moulage similaire.

L'unité 24 de moulage comporte un dispositif 50 de verrouillage, de l'unité comportant un organe 52 de commande des moyens 55 de verrouillage de l'unité 24 de moulage en position fermée.

Le dispositif 50 de verrouillage est agencé longitudinalement en partie avant, soit à l'opposé de l'axe O de rotation et des moyens du dispositif 46 d'ouverture/fermeture de l'unité 24 de moulage, et est destiné à assurer le verrouillage des deux porte-moules 26 en position fermée.

Le dispositif 50 de verrouillage comporte par exemple deux demi-verrous respectivement de type mâle et de type femelle qui sont associés aux porte-moules 26 et aptes à coopérer mutuellement pour maintenir l'unité 24 de moulage en position fermée.

Ainsi, le dispositif 50 de verrouillage a notamment pour fonction de prévenir, en mode de production, toute ouverture inopinée lors des opérations de transformation par formage de la préforme, de préférence par soufflage ou par étirage-soufflage.

A titre indicatif, on rappellera que les pressions finales de soufflage peuvent atteindre 40 bars.

Le dispositif 50 de verrouillage est plus particulièrement représenté en détails sur la coupe de la figure 4.

Les demi-verrous comportent chacun au moins une branche saillante, de préférence ici des branches 54 simples pour le demi-verrou du porte-moule 26 de gauche et des branches 56 doubles pour le demi-verrou du porte-moule 26 de droite.

Les branches 54, 56 respectives des demi-verrous sont dirigées transversalement en direction l'une de l'autre et sont mutuellement décalées verticalement de sorte que, en position fermée telle qu'illustrée par la figure 4, les branches s'interpénètrent entre elles.

Ainsi, chaque branche 54 est reçue entre les deux branches 56 qui se positionnent verticalement au dessus et en dessous.

De préférence, chaque branche 54 du demi-verrou de type femelle comporte une ouverture 58 qui, s'étendant suivant un axe vertical, traverse ladite branche 54 et chaque branche 56 du demi-verrou de type mâle supporte à coulissements selon la direction verticale un doigt 60 de verrouillage.

Lé dispositif 50 de verrouillage comporte des moyens 62 d'entraînement qui sont liés en déplacement, ici en coulissement, aux doigts 60 de verrouillage formant avec les couvertures 58 complémentaires les moyens 55 de verrouillage montés mobiles entre une position verrouillée et une position déverrouillée.

Avantageusement, chaque doigt 60 de verrouillage est solidaire d'un bras 64 de liaison qui est lui-même solidaire en déplacement des moyens 62 d'entraînement.

Le coulissement des moyens 62 d'entraînement entre la position verrouillée (position basse) et la position déverrouillée (position haute) est commandé par l'organe 52 de commande, de préférence formé par un galet, solidaire des moyens 62 d'entraînement, tels qu'un arbre.

Ainsi, le dispositif 50 de verrouillage de l'unité 24 de moulage comporte un organe 52 de commande des moyens 55 de verrouillage qui sont montés mobiles entre :
- une position verrouillée dans laquelle les porte-moules 26 de l'unité 24 de moulage sont maintenus en position fermée par lesdits moyens 55 de verrouillage, et
- une position déverrouillée dans laquelle les porte-moules 26 sont libres d'être déplacés entre la position fermée et la position , ouverte.

En mode de fonctionnement, dit de production, de la machine, l'organe 52 de commande constitué par le galet (en trait silhouette sur la figure 4) est destiné à coopérer avec des moyens à came complémentaires pour commander sélectivement lesdits moyens 55 de verrouillage du dispositif 50 de verrouillage entre lesdites positions verrouillée et déverrouillée.

En référence à la figure 1 , de tels moyens à came sont agencés dans une machine 10 au voisinage de la zone Zi d'introduction des préformes 14 et de la zone Ze d'évacuation des récipients 14' de manière à actionner le galet formant l'organe 52 de commande du dispositif 50 de verrouillage.

De manière connue, d'autres moyens à came sont également agencés dans ces mêmes zones Zi et Ze pour l'actionnement de l'organe 48 de commande, formé ici par le bras 42 et le galet 44, du dispositif 46 d'ouverture/fermeture, pour commander sélectivement l'ouverture et la fermeture de l'unité 24 de moulage dans le but de pouvoir introduire une préformes 14 ou extraire un récipient 14'.

Avantageusement, le dispositif 50 de verrouillage comporte des moyens 66 due rappel élastique qui sont aptes à rappeler automatiquement les moyens 55 de verrouillage vers la positron verrouillée.

De préférence, les moyens 66 sont formés par un ressort de rappel élastique qui est traversé centralement par l'arbre formant les moyens 62 d'entraînement et qui prend appui à l'une de ses extrémités sur une coupelle 67 et à l'autre extrémité sur un support 68 fixé aux moyens 62 d'entraînement et portant l'organe 52 de commande.

Pour de plus amples détails sur la structure et le fonctionnement d'un tel dispositif 50 de verrouillage, on pourra par exemple se reporter au document FR-2.646.802 qui décrit un verrou de conception globalement similaire.

Avantageusement, le dispositif 50 de verrouillage de l'unité 24 de moulage comporte un mécanisme 70 de blocage qui est associé aux moyens 55 de verrouillage.

Un tel mécanisme 70 de blocage est plus particulièrement visible sur la figure 4.

Avantageusement, le mécanisme 70 comporte des moyens 72 de blocage, tels qu'un coulisseau, qui sont aptes à être commandés sélectivement entre une position inactive (non représentée), qui est associée à la position verrouillée dû dispositif 50 de verrouillage, et une position active de blocage (figure 4) qui est associée à la position déverrouillée du dispositif 50 de verrouillage.

La position active de blocage correspond à la position dans laquelle lesdits moyens 72 de blocage immobilisent les moyens 55 de verrouillage en position déverrouillée.

De préférence, les moyens 72 de blocage comportent une partie de blocage mâle formée par un ergot 74 qui est apte à pénétrer dans une partie femelle complémentaire des moyens 62 d'entraînement et qui est ici formée par un cran 76.

Grâce à la coopération de formes entre l'ergot 74 des moyens 72 de blocage et le cran 76 des moyens 62 d'entraînement, les moyens 62 d'entraînement sont immobilisés et ne sont alors plus susceptibles de coulisser vers la position verrouillée, en présence ou en l'absence d'application d'un effort de déverrouillage sur l'organe 52 de commande.

En l'absence du blocage par le mécanisme 70, un tel retour en position verrouillée serait automatiquement provoqué par les moyens 66 de rappel élastique.

Les moyens 72 de blocage sont ici montés mobiles en translation selon la direction transversale, c'est à dire orthogonalement à la direction verticale selon laquelle s'étendent les moyens 62 d'entraînement des moyens 55 de verrouillage, entre lesdites positions inactive et active de blocage.

Avantageusement, le mécanisme 70 de blocage comporte un organe 78 de rappel élastique des moyens 72 de blocage vers la position active de blocage.

Avantageusement, les moyens 72 de blocage sont aptes à être déplacés, à l'encontre dudit organe 78 de rappel élastique, de la position active vers la position inactive par un élément de commande.

De préférence, l'élément de commande est formé par une des branches 54 qui est apte à coopérer avec un doigt 80 solidaire des moyens 72 de blocage de manière à provoquer automatiquement le déblocage du mécanisme 70 lors de la fermeture des porte-moules 26 de l'unité 24 de moulage.

Le doigt 80 s'étend en saillie transversalement au delà de la partie mâle formée par l'ergot 74 et jusqu'au logement délimité par les branches 56 dans lequel la branche 54 est destinée à être reçue en position fermée, l'extrémité de ladite branche 54 coopérant alors avec l'extrémité dudit doigt 80 de manière à provoquer le coulissement transversal des moyens 72 de blocage de la position active de blocage vers la position inactive et ceci à l'encontre de l'organe 78 de rappel élastique.

Par conséquent, dès le début de l'ouverture des porte-moules 26, lorsque la branche 54 se désengage d'entre les branches 56 et ne sollicite plus le doigt 80, les moyens 72 de blocage sont automatiquement rappelés vers la position active de blocage dans laquelle l'ergot 74 inséré dans le cran 76 assure l'immobilisation des moyens 55 de verrouillage en position déverrouillée.

Bien entendu, le dispositif 50 de verrouillage décrit et représenté à la figure 4 n'est donné qu'à titre d'exemple non limitatif.

Conformément à l'invention, la machine 10 de fabrication de récipient, notamment de bouteilles en matière thermoplastique, décrite précédemment se caractérise par le fait qu'elle comporte un système 82 d'assistance au changement de moule.

On décrira maintenant différents modes de réalisation d'un tel système 82 selon l'invention, lequel système est - pour chacun desdits modes - notamment mais non exclusivement aptes à être utilisé dans une machine 10 selon la figure 1 comportant au moins des unités 24 de moulage selon le figures 2 et 3.

De préférence, les unités 24 de moulage sont chacune équipées d'un dispositif 50 de verrouillage du type de celui décrit et représenté à la figure 4.

La machine 10 comporte un système d'assistance au changement de moule comportant au moins un module 84 associé à au moins une unité 24 de moulage, ledit module 84 comportant un dispositif d'actionnement 86 qui comporte un organe 88 de manoeuvre destiné à coopérer avec ledit organe 52 de commande des moyens 55 de verrouillage du dispositif 50 de verrouillage lorsque l'unité 24 de moulage occupe une position de référence déterminée par rapport audit au moins un module 84 du système 82, ledit organe 88 de manoeuvre étant apte à être entraîné en déplacement afin d'actionner ledit organe 52 de commande des moyens 55 de verrouillage, d'une part, pour provoquer le déplacement des moyens 55 de verrouillage vers au moins l'une desdites positions verrouillée ou déverrouillée et, d'autre part, pour provoquer le déplacement des porte-moules 26 vers au moins l'une desdites positions ouverte, ou fermée de l'unité 24 de moulage.

Avantageusement, le système 82 permet de réaliser de manière automatisé les opérations de déverrouillage/verrouillage et d'ouverture/fermeture d'au moins une unité 24 de moulage prise en charge par le système pour procéder au changement du moule, c'est-à-dire des éléments 28 de moulage avec ou sans fond de moule de ladite unité.

L'intervention d'au moins un opérateur se limite par conséquent aux opérations de démontage et montage du moule, c'est-à-dire à agir sur les moyens de fixation des éléments 28 de moulage et à procéder au changement de ces derniers.

Grâce à quoi, la durée totale requise pour procéder à un changement de moule se trouve substantiellement réduite par rapport au temps auparavant nécessaire pour réaliser manuellement ces mêmes opérations en l'absence de système.

Avantageusement, en état d'utilisation comme en état de veille, ledit au moins un module 84 du système 82 est agencé globalement en dessous ladite au moins une unité 24 de moulage associée portée par le carrousel 22 permettant d'obtenir une excellente ergonomie d'ensemble.

Tout particulièrement, lorsque l'unité 24 de moulage occupe, en vue d'un changement de moule, une position de référence déterminée par rapport audit module 84 selon l'invention, l'espace environnant est complètement dégagé ce qui facilite l'intervention de l'opérateur.

Le système 82 participe donc à l'amélioration de l'ergonomie pour l'opérateur destiné à intervenir sur la machine 10, notamment en vue du changement de tout ou partie des moules.

Avantageusement, le système 82 est susceptible d'occuper au moins :
- un état de veille associé au mode de fonctionnement de la machine 10, dit de production, pour la fabrication de récipients par la machine, et
- un état d'utilisation associé à une autre mode de fonction-nement de la machine 10, dit d'intervention, pour procéder au moins au changement du moule de l'unité 24 de moulage.

Le système 82 d'assistance au changement de moule est apte à être mis en oeuvre sélectivement pour procéder au changement d'au moins un moule d'une unité 24 de moulage, ladite mise en oeuvre s'effectuant uniquement lorsque la machine 10 est dans le mode de fonctionnement particulier, dit d'intervention, et débutant initialement par le passage de l'état de veille à l'état d'utilisation dudit système 82.

Inversement, lorsque l'intervention sur la machine 10 est achevée, le passage de l'état d'utilisation à l'état de veille dudit système 82 achève et précède le retour du mode de fonctionnement, dit d'intervention, au mode dit de production.

On décrira maintenant un premier mode de réalisation de l'invention, dit "monoposte", en raison de ce que le système 82 comporte un seul module 84 destiné à traiter une unité 24 de moulage associée au cours d'un cycle complet de changement de moule.

Selon ce premier mode de réalisation illustré à la figure 5, le système 82 d'assistance au changement de moule de la machine 10 comporte un module 84 associé à une unité 24 de moulage de la machine 10.

Le module 84 comporte un dispositif 86 d'actionnement comportant l'organe 88 de manoeuvre destiné à coopérer avec ledit organe 52 de commande des moyens 55 de verrouillage lorsque ladite unité 24 de moulage associée occupe une position de référence déterminée par rapport audit module 84.

Ledit organe 88 de manoeuvre est apte à être entraîné en déplacement pour actionner ledit organe 52 de commande des moyens 55 de verrouillage.

Tel qu'illustré à la figure 5, l'organe 88 de manoeuvre comporte une partie de préhension munie d'un logement 90 qui est complémentaire de l'organe 52 de commande à actionner.

De préférence, le logement 90 de l'organe de manoeuvre 88 présente globalement une forme semi-circulaire en "U" qui s'ouvre verticalement vers le haut en direction de l'organe 52 de commande, formé ici par un galet, destiné à être reçu dans ledit logement 90 en vue de son actionnement.

Avantageusement, le logement 90 est évasé au voisinage de son ouverture afin de faciliter la préhension comme la libération de l'organe 52 de commande.

Au cours du cycle de changement de moule, l'organe 88 de manoeuvre est destiné à être entraîné en déplacement pour, d'une part, provoquer le déplacement des moyens 55 de verrouillage vers au moins l'une desdites positions verrouillée ou déverrouillée et pour, d'autre part, provoquer le déplacement des porte-moules 26 vers au moins l'une desdites positions ouverte ou fermée de l'unité 24 de moulage.

Pour ce faire, le dispositif 86 d'actionnement du module 84 du système 82 comporte tout d'abord des premiers moyens 92 d'entraînement de l'organe 88 de manoeuvre.

Les premiers moyens 92 d'entraînement sont destinés à déplacer sélectivement l'organe 88 de manoeuvre entre au moins :
- une première position P1 associée à la position verrouillée des moyens 55 de verrouillage de l'unité 24 de moulage, et
- une deuxième position P2 associée à la position déverrouillée des moyens 55 de verrouillage de l'unité 24 de moulage.

Tel que décrit précédemment en relation avec la figure 4, le dispositif 50 de verrouillage de l'unité 24 de moulage en position fermée est du type dans lequel les moyens 55 de verrouillage sont formés par des ouvertures 58 complémentaires et des doigts 60 de verrouillage qui sont liés aux moyens 62 d'entraînement.

Dans un tel dispositif 50 de verrouillage, l'organe 52 de commande est destiné à entraîner en coulissement, ici selon la direction verticale, lesdits moyens 62 d'entraînement afin de déplacer les doigts 60 de verrouillage entre lesdites positions verrouillée et déverrouillée.

Avantageusement, l'organe 88 de manoeuvre est donc apte à être déplacé en translation par lesdits premiers moyens 92 d'entraînement au moins entre lesdites première et deuxième positions P1, P2.

Le dispositif 86 d'actionnement du module 84 du système 82 comporte ensuite des deuxièmes moyens 94 d'entraînement de l'organe 88 de manoeuvre.

Les deuxièmes moyens 94 d'entraînement sont destinés à déplacer l'organe 88 de manoeuvre entre au moins :
- ladite deuxième position P2 dans laquelle les porte-moules 26 de l'unité 24 de moulage sont en position fermée et dans laquelle les moyens 55 de verrouillage sont en position déverrouillée, et
- une troisième position P3 dans laquelle les porte-moules 26 de l'unité 24 de moulage sont en position ouverte.

Tel que décrit précédemment en relation avec les figures 2 et 3, les unités 24 de moulage de la machine 10 sont du type comportant deux porte-moules 26 mutuellement montés mobiles en rotation autour de l'axe O de rotation entre lesdites positions ouverte et fermée.

Avantageusement, l'organe 88 de manoeuvre est donc apte à être déplacé en rotation par lesdits deuxièmes moyens 94 d'entraînement au moins entre lesdites deuxième et troisième positions P2, P3.

Avantageusement, les premiers et deuxièmes moyens d'entraînement 92, 94 sont constitués par des actionneurs aptes à être chacun commandés sélectivement, notamment par une unité de commande, afin de piloter les déplacements de l'organe 88 de manoeuvre.

De préférence, les moyens d'entraînement 92, 94 sont constitués par des vérins, tel qu'un vérin hydraulique ou pneumatique, formant de tels actionneurs ou encore un actionneur à moteur électrique.

Avantageusement, les premiers et deuxièmes moyens d'entraînement sont ici des vérins de type pneumatique mettant à profit une source d'énergie présente sur de telle machine et unité 24 de moulage par soufflage et ainsi disponible pour alimenter les moyens d'entraînement 92, 94.

Selon le premier mode de réalisation illustré à la figure 5, l'organe 88 de manoeuvre présente une partie de support 96 globalement une forme en "L" qui comporte respectivement une première branche 96A d'orientation verticale et une seconde branche 96B d'orientation longitudinale.

De préférence, la première branche 96A de la partie de support 96 de l'organe 88 de manoeuvre est apte à supporter les premiers moyens 92 d'entraînement, tel qu'un vérin, comportant une tige 98 d'actionnement qui est montée coulissante verticalement selon la double flèche T indiquée à la figure 5 et dont l'extrémité libre est apte à agir sur l'organe 88 de manoeuvre comportant le logement 90 pour provoquer son déplacement en translation entres lesdites première et deuxième positions P1 et P2 afin d'actionner l'organe 52 de commande des moyens 55 de verrouillage.

De préférence, la seconde branche 96B longitudinale de la partie de support 96 comporte une première extrémité, située ici vers avant, qui est reliée à l'extrémité inférieure de la première branche 96A verticale et une deuxième extrémité, située vers l'arrière, qui est reliée à un pivot 100.

Le pivot 100 détermine, par l'intermédiaire de la partie de support 96, un axe A de rotation de l'organe 88 de manoeuvre destiné à pivoter sous l'actionnement des deuxièmes moyens 94 d'entraînement entre lesdites deuxième et troisième positions P2 et P3.

Le pivot 100 comporte à son extrémité inférieure un socle 102 de fixation, notamment destiné à permettre son ancrage au sol ou à une structure porteuse reliée au sol, en variante reliée à la machine 10, et comportant à cet effet des trous pour le passage d'organes de fixation tels que des vis.

Les deuxièmes moyens 94 d'entraînement, tel qu'un vérin, comportent une tige 104 d'actionnement et sont respectivement liés à la seconde branche 96B de support par une première liaison 106 pivotante et à un élément fixe par une deuxième liaison 108 pivotante.

Grâce à quoi, lorsque la tige 104 d'actionnement coulisse, les deuxièmes moyens 94 d'entraînement appliquent sur la seconde branche 96B de support, au niveau de la première liaison 106, un effort, de poussée ou de traction, propre à provoquer le pivotement, selon la double flèche R indiquée à la figure 5, de la seconde branche 96B de la partie de support 96 de l'organe 88 de manoeuvre autour du pivot 100.

L'organe 88 de manoeuvre du module 84 du système 82 est apte à pivoter autour dudit axe A de rotation déterminé par le pivot 100, notamment entre lesdites deuxième et troisième positions P2 et P3.

Avantageusement, l'axe A de rotation du pivot 100 est coaxial avec ledit axe O de rotation autour duquel l'un au moins des porte-moules 26 est monté mobile en rotation, respectivement entre lesdites positions ouverte et fermée de l'unité 24 de moulage.

Avantageusement, le système 82 comporte une unité de commande (non représentée) destinée à commander au moins un module 84, le module 84 du système 82 dans ce premier mode de réalisation.

L'unité de commande du système 82 est apte à commander sélectivement le système 82 d'assistance au changement de moule et plus particulièrement les changements d'état du système 82 entre l'état de veille et l'état d'utilisation respectivement.

L'unité de commande du système 82 est apte à commander séquentiellement selon un cycle de changement de moule ledit changement d'état du système 82 en fonction notamment du mode de fonctionnement de la machine 10 et au moins lesdits premiers et deuxièmes moyens d'entraînement 92 et 94 du dispositif 86 d'actionnement du module 84 du système 82 en état d'utilisation.

Préalablement à la mise en oeuvre dudit cycle de changement de moule, on commande la machine 10 de manière à en modifier le mode de fonctionnement et, bien entendu, on commande ensuite le changement d'état du système 82 de l'état de veille vers l'état d'utilisation.

Le cycle de changement de moule commandé sélectivement et séquentiellement par l'unité de commande du système 82 en état d'utilisation comporte au moins :
- une première phase de cycle au cours de laquelle l'organe 88 de manoeuvre du dispositif 86 d'actionnement est successivement déplacé de la première position P1 à la deuxième position P2 puis de ladite deuxième position P2 à la troisième position P3, et
- une deuxième phase de cycle au cours de laquelle l'organe 88 de manoeuvre du dispositif 86 d'actionnement est successivement déplacé de la troisième position P3 à la deuxième position P2 puis de ladite deuxième position P2 à la première position P1.

Par exemple, si la machine 10 est dans le mode de fonctionnement de fabrication de récipients 14', on commande la machine 10 pour passer de ce mode au mode de fonctionnement, dit d'intervention.

Dans le cas d'une machine 10 de type rotative telle qu'illustrée sur la figure 1, le carrousel 22 est entraîné en rotation par des moyens (non représentés) d'entraînement à moteur qui sont commandés par une unité de contrôle (non représentée).

En mode de fonctionnement de la machine, dit de production, mis en oeuvre pour la fabrication de récipients de la machine, la cadence de la machine 10 est ainsi déterminée par la vitesse de rotation de la machine.

Dans une machine 10 selon l'état de la technique, l'arrêt de la rotation du carrousel 22 est obtenu soit par l'arrêt des moyens d'entraînement à moteur, le carrousel 22 finissant ensuite par s'arrêter de lui-même après un laps de temps donné, soit par un arrêt des moyens d'entraînement à moteur et l'actionnement de moyens de freinage associés au carrousel 22 de manière à pouvoir procéder à un arrêt rapide de la machine 10.

De plus, dans l'état de la technique, pour procéder à un changement de moule, l'unité 24 de moulage était jusqu'alors amenée dans la zone d'intervention souhaitée par l'opérateur qui commandait à l'aide d'une télécommande reliée à l'unité de contrôle la rotation du carrousel 22 par à-coups successifs jusqu'à ce que l'unité 24 de moulage désirée de la série soit positionnée approximativement dans ladite zone d'intervention.

Avantageusement, l'unité de contrôle de la machine 10 commande de la rotation de la machine 10 pour assurer la transition dudit mode de production vers le mode de fonctionnement, dit d'intervention.

Pour ce faire, J'unité de contrôle commande les moyens d'entraînement du carrousel 22 et, le cas échéant un variateur, afin de ralentir ledit carrousel 22.

Avantageusement, une unité 24 de moulage donnée parmi les unités 24 de moulage de la machine 10 est ainsi amenée à occuper une position de référence déterminée par rapport au module 84.

En effet, dans une machine 10 pour la fabrication de récipients, les différentes unités 24 de moulage réparties circonférentiellement sont avantageusement toutes identifiées, par exemple par un numéro : 1, 2, 3 ... selon le nombre total d'unités de la série.

Une telle identification permet avantageusement d'établir une traçabilité tant lors du mode de fonctionnement, dit de production, de la machine 10 que lors des changements de moule opérés dans le mode de fonctionnement, dit d'intervention.

Ainsi, chacune des unités 24 de moulage de la série que comporte la machine 10 est parfaitement identifiée de même qu'est identifié le moule qu'elle comporte.

Grâce à l'unité de contrôle de la machine 10, on réalise un asservissement en position de manière à arrêter la machine 10 lorsque ladite unité 24 de moulage donnée, par exemple la première (N°1), occupe ladite position déterminée de référence.

A cet égard, on rappellera que, pour une machine 10 rotative, la distance entre deux unités 24 de moulage consécutives est généralement appelée "pas" et que le pas est fonction du nombre d'unités 24 de moulage dé la série qui sont réparties angulairement de manière régulière sur les 360° de la circonférence du carrousel 22.

On a représenté aux figures 6A et 6B, lesdites première phase et deuxième phase du cycle de changement de moule assisté par le système 82 comportant un module 84 destiné à traiter une unité 24 de moulage associée occupant ladite position de référence déterminée par rapport au module.

On rappellera que, lorsque la machine 10 est dans ce mode de fonctionnement, dit de fabrication, le système 82 occupe quant à lui un état de veille dans lequel il n'y a aucune interférence possible entre le système 82 et les unités 24 de moulage de la machine 10.

Dès lors que ladite unité 24 de moulage occupe la position déterminée de référence par rapport au système 82 et que la machine 10 est arrêtée pour l'y maintenir, on commande alors le système 82, plus particulièrement l'unité de commande du système 82, de manière à réaliser ledit cycle de changement de moule.

Selon une première étape (a) de la première phase dudit cycle de changement de moule, le système 82 est commandé pour changer d'état, c'est-à-dire pour passer de l'état de veille occupé jusqu'alors à l'état d'utilisation.

Tel qu'indiqué précédemment, ledit état d'utilisation du système 82 est en effet associé au mode de fonctionnement de la machine, dit d'intervention, lequel est en particulier mis en oeuvre pour procéder aux changements du moule de tout ou partie des unités 24 de moulage de la machine 10.

De préférence, l'organe 88 de manoeuvre du dispositif d'actionnement 86 du module 84 du système 82 est monté mobile entre au moins :
- une position escamotée P0 correspondant audit état de veille du système 82 qui est associé à un mode de fonctionnement de la machine 10, dit de production, pour la fabrication de récipients par la machine, et
- ladite première position P1 correspondant à l'état d'utilisation du système 82.

Avantageusement, les premiers moyens 92 d'entraînement dudit organe 88 de manoeuvre constituent donc des moyens de commande du changement d'état du système 82 entre lesdits états de veille et d'utilisation.

En variante non représentée, le système 82 est monté mobile par rapport à la machine 10 et aux unités 24 de moulage, respectivement entre au moins une position de repos correspondant à l'état dé veille et une position de travail correspondant à l'état de fonctionnement.

De préférence, le système 82 est alors réalisé sous la forme d'un chariot motorisé qui est apte à être commandé sélectivement en déplacement entre lesdites positions escamotée et avancée.

Grâce à quoi, dans la position de repos selon la variante comme avec la position escamotée P0 selon les modes de réalisation, l'organe 88 de manoeuvre du au moins un module 84 n'interfère pas avec lesdits unités 24 de moulage lorsque le système 82 est à l'état de veille et la machine 10 entraînée en rotation au cours de son mode de fonctionnement dit de production.

Plus précisément, ledit au moins un organe 88 de manoeuvre n'est alors en particulier pas susceptible d'entrer en contact avec un organe 52 de commande d'un dispositif 50 de verrouillage de l'une des unités 24 de moulage.

Tel qu'illustré sur la figure 6A, l'unité 24 de moulage étant immobilisée dans ladite position de référence déterminée, la première étape (a) de la première phase du cycle de changement de moule consiste donc à déplacer en translation, ici en coulissement de bas en haut, l'organe 88 de manoeuvre de la position escamotée P0 à ladite première position P1.

Pour ce faire, l'unité de commande du système 82 commande les premiers moyens 92 d'entraînement pour déplacer la tige 98 d'actionnement selon une première course T1 correspondant à un déplacement de l'organe 88 de manoeuvre de la position escamotée P0 vers la première position P1 .

La première position P1 correspond à une position dans laquelle ledit organe 88 de manoeuvre coopère avec l'organe 52 de commande du dispositif 50 de verrouillage de l'unité 24 de moulage associée qui occupe la position de référence déterminée.

Selon une deuxième étape (b) de la première phase du cycle illustrée à la figure 6A, l'organe 88 de manoeuvre est déplacé en translation par lesdits premiers moyens 92 d'entraînement
- de ladite première position P1 dans laquelle ledit organe 88 de manoeuvre coopère avec l'organe 52 de commande des moyens 55 de verrouillage occupant la position verrouillée
- vers ladite deuxième position P2 dans laquelle ledit organe 88 de manoeuvre exerce sur l'organe 52 de commande des moyens 55 de verrouillage un effort, dit de déverrouillage, propre à amener lesdits moyens 55 de verrouillage en position déverrouillée.

Pour ce faire, l'unité de commande du système 82 commande les premiers moyens 92 d'entraînement pour déplacer la tige 98 d'actionnement selon une deuxième course T2 correspondant à un déplacement de l'organe 88 de manoeuvre de la première position P1 vers la deuxième position P2.

La deuxième position P2 correspond à une position dans laquelle ledit organe 88 de manoeuvre ayant appliqué, à l'encontre de l'organe 66 de rappel élastique du dispositif 50 de verrouillage, ledit effort de déverrouillage sur l'organe 52 de commande des moyens 55 de verrouillage, lesdits moyens 55 de verrouillage occupent la position déverrouillée.

Lorsque l'organe 62 d'entraînement portant les doigts 60 de verrouillage formant une partie des moyens 55 de verrouillage coulisse pour atteindre ladite position déverrouillée, le cran 76 des moyens 72 de blocage du mécanisme 70 de blocage se trouve alors positionné en vis-à-vis de l'ergot 74.

Les moyens 72 de blocage n'occupent alors pas encore la position active de blocage dans laquelle ils immobilisent les moyens 55 de verrouillage en position déverrouillée.

En effet, l'unité 24 de moulage occupant toujours la position fermée, la branche 54 sollicite l'extrémité du doigt 80 à l'encontre de l'organe 78 de rappel élastique de sorte que les moyens 72 de blocage sont, pour un temps encore, maintenus en position inactive de blocage.

L'effort de déverrouillage appliqué par l'organe 88 de manoeuvre sur l'organe 52 de commande des moyens de déverrouillage est alors maintenu faute de quoi les moyens 66 de rappel élastique rappelleraient automatiquement les moyens 55 de verrouillage vers la position verrouillée.

Selon une troisième étape (c) de la première phase du cycle illustrée à la figure 6A, l'organe de manoeuvre est apte à être déplacé en rotation par lesdits deuxièmes moyens 94 d'entraînement de ladite deuxième position P2 dans laquelle ledit organe 88 de manoeuvre sollicite l'organe 52 de commande dès moyens 55 de verrouillage en position déverrouillée, vers la troisième position P3.

La troisième position P3 est atteinte après que ledit organe 88 de manoeuvre ait appliqué à l'organe 52 de commande, au cours de la course T, un effort dit d'ouverture, propre à provoquer le déplacement en rotation autour de l'axe O d'au moins l'un des porte-moules 26 et de manière que les porte-moules 26 occupent finalement ladite position ouverte de l'unité 24 de moulage.

Pour ce faire, l'unité de commande du système 82 commande les deuxième moyens 94 d'entraînement pour déplacer la tige 104 d'actionnement selon une course T propre à provoquer le pivotement selon la flèche R de la partie de support 96 autour du pivot 100, c'est-à-dire le déplacement de l'organe 88 de manoeuvre de ladite deuxième position P2 vers la troisième position P3.

Dès le début de l'ouverture des porte-moules 26, la branche 54 se désengage d'entre les branches 56 et ne sollicite dès lors plus le doigt 80 dé sorte que les moyens 72 de blocage sont automatiquement rappelés par l'organe 78 de rappel élastique vers la position active de blocage, soit la position dans laquelle l'ergot 74 s'insérant dans le cran 76 assure l'immobilisation des moyens 55 de verrouillage en position déverrouillée.

Grâce à quoi, il est dès lors indifférent que l'organe 88 de manoeuvre continue ou non d'appliquer sur l'organe 52 de commande ledit effort de déverrouillage, les moyens 55 de verrouillage étant maintenus en position déverrouillée par les moyens 72 de blocage à l'encontre des moyens 66 de rappel élastique aptes à les rappeler automatiquement vers la position verrouillée.

L'unité 24 de moulage est alors en position ouverte et l'opérateur est libre de procéder à la libération des éléments 28 de moulage, en agissant sur les moyens de fixation intervenant entre ces derniers et les porte-moules 26, grâce à quoi il est procédé au démontage desdits éléments 28 de moulage.

Le démontage des éléments 28 de moulage (figure 6A) est suivi du montage et de la fixation de nouveaux éléments 28 de moulage dans les porte-moules 26, ladite opération de montage (figure 6B) étant également réalisée par l'opérateur.

Une fois ledit changement de moule de l'unité 24 de moulage opéré, la première phase du cycle de changement de moule est alors achevée et le système 82 est commandé pour mettre en oeuvre la deuxième phase du cycle.

La deuxième phase du cycle de changement correspond à l'exécution, en sens inverse, des étapes (a), (b) et (c) précédemment décrites pour la première phase du cycle en référence à la figure 6A.

Ainsi, selon une quatrième étape (d) de la deuxième phase du cycle, l'organe 88 de manoeuvre est déplacé en rotation par lesdits deuxièmes moyens 94 d'entraînement de ladite troisième position P3 vers ladite deuxième position P2.

Pour ce faire, l'unité de commande du système 82 commande les deuxièmes moyens 94 d'entraînement pour déplacer la tige 104 d'actionnement selon une course opposée à la course T et propre à provoquer le pivotement en sens inverse de la partie de support 96 autour du pivot 100, c'est-à-dire le déplacement de l'organe 88 de manoeuvre depuis la troisième position P3 jusqu'à ladite deuxième position P2.

Ainsi, la deuxième position P2 est de nouveau atteinte après que ledit organe 88 de manoeuvre ait appliqué à l'organe 52 de commande, lors de ladite course opposée à la course T, un effort, dit de fermeture, propre à provoquer le déplacement d'au moins l'un des porte-moules 26 autour de l'axe O de rotation et de manière que les porte-moules 26 occupent à la fin de cette quatrième étape (d) ladite position fermée de l'unité 24 de moulage.

Lorsque l'unité 24 de moulage atteint la position fermée à la fin de la quatrième étape, le doigt 80 se trouve sollicité par la branche 54 provoquant alors le coulissement des moyens 72 de blocage, ici un coulisseau, à l'encontre de l'organe 78 de rappel de sorte que, l'ergot 94 se désengageant du cran 96, les moyens 72 de blocage occupent alors non plus la position active mais la position inactive dans laquelle les moyens 55 de verrouillage sont libres d'être rappelés vers la position verrouillée par les moyens 66 de rappel élastique.

Toutefois, les moyens 55 de verrouillage son maintenus en position déverrouillée car l'organe 88 de manoeuvre occupant ladite deuxième position P2 immobilise l'organe 52 de commande et donc l'organe 62 d'entraînement.

Selon une cinquième étape (e) de la deuxième phase du cycle, l'organe 88 de manoeuvre est donc déplacé en translation par lesdits premiers moyens 92 d'entraînement au moins :
- de ladite deuxième position P2 dans laquelle ledit organe 88 de manoeuvre coopère avec l'organe 52 de commande des moyens 55 de verrouillage occupant la position déverrouillée,
- vers ladite première position P1 dans laquelle ledit organe 88 de manoeuvre exerce sur l'organe 52 de commande des moyens 55 de verrouillage un effort, dit de verrouillage, propre à amener lesdits moyens 55 de verrouillage en position verrouillée.

Le déplacement de l'organe 88 de manoeuvre vers la première position P1, libérant l'organe 52 de commande, permet aux moyens 66 de rappel du dispositif 50 de verrouillage de rappeler automatiquement les moyens 55 de verrouillage en position verrouillée.

En variante, en l'absence de tels moyens 66 de rappel élastique, l'organe 88 de manoeuvre est alors modifié (logement ouvert 90) afin d'être apte à exercer sur l'organe 52 de commande ledit effort de verrouillage propre à amener lesdits moyens 55 de verrouillage en position verrouillés.

A titre d'exemple non limitatif, l'organe 88 de manoeuvre est alors réalisé sous la forme d'une pince apte à être commandée sélectivement au moins en ouverture pour saisir l'organe 52 de commande des moyens 55 de verrouillage.

Avantageusement, la présence de moyens 66 de rappel élastique des moyens 55 de verrouillage permet de simplifier la forme de l'organe 88 de manoeuvre.

On notera que la présence d'un mécanisme 70 de blocage est quant à elle indifférente pour le mode de fonctionnement, dit d'intervention, de la machine 10 dès lors que l'organe 88 de manoeuvre du module 84 du système 82 est susceptible d'être maintenu dans la deuxième position P2 par les premiers moyens 92 d'entraînement.

En effet, on relèvera que le déplacement de l'organe 88 de manoeuvre provoqué par les deuxièmes moyens 94 d'entraînement commandés par l'unité de commande du système 82 pour obtenir l'ouverture (étape c) ou la fermeture (étape d) n'exige nullement que l'organe 88 de manoeuvre occupe ladite deuxième position P2, toutefois ce faisant il est possible de procéder immédiatement au verrouillage dès la position fermée de l'unité 24 de moulage atteinte.

La deuxième phase du cycle s'achève par une sixième étape (f) consistant à déplacer l'organe 88 de manoeuvre au-delà de la première position P1, vers la position escamotée P0 correspondant à l'état de veille du système 82.

De préférence, l'unité de commande du système 82 commande les premiers moyens 92 d'entraînement pour déplacer en translation l'organe 88 de manoeuvre au-delà de ladite position P1, avantageusement jusqu'à la position escamotée P0.

Le cycle de changement de moule de l'unité 24 de moulage occupant la position déterminée par rapport au module 82 étant achevé, l'unité de contrôle de la machine 10 commande alors les moyens d'entraînement pour provoquer une rotation du carrousel 22 d'une valeur donnée afin d'amener en position de référence une autre unité 24 de moulage.

A titre d'exemple on effectue une rotation du carrousel 22 d'une valeur égale au pas de la machine, c'est-à-dire l'écartement entre deux unités 24 de moulage consécutives, afin d'amener l'unité 24 de moulage suivante (N°2) dans ladite position de référence déterminée par rapport au module 84 du système 82.

En variante, l'unité de contrôle commande les moyens d'entraînement de la machine 10 pour effectuer un déplacement en rotation du carrousel 22 d'une valeur de deux pas si l'on souhaite par exemple ne procéder au changement de moule que d'une unité 24 de moulage sur deux.

Le cycle de changement de moule selon les étapes (a) à (f) décrites précédemment est alors de nouveau mis en oeuvre afin de procéder au changement du moule de ladite unité 24 de moulage avec, pour les opérations de déverrouillage/verrouillage du dispositif 50 de verrouillage et d'ouverture/fermeture de l'unité 24 de moulage, l'assistance du système 82.

Grâce au système 82 selon l'invention, il est possible de réduire le temps total requis pour changer les moules de tout ou partie de la série d'unités 24 de moulage portées par le carrousel 22 de la machine 10 en réduisant le temps nécessaire au changement du moule de chaque unité 24 de moulage.

Avantageusement, le temps total requis pour changer les moules de la série d'unités 24 de moulage de la machine 10 est encore susceptible d'être réduit par la mise en oeuvre de plus d'un module 84.

De préférence, la machine 10 comporte donc au moins deux modules 84, tels que des modules du type du module 84 du système 82, dit monoposte, décrit dans le premier mode de réalisation et représenté à la figure 5, et chacun desdits modules 84 est apte à traiter une unité 24 de moulage qui, occupant une position de référence déterminées, lui est associée le temps de la mise en oeuvre du cycle de changement de moule.

Selon une première conception de réalisation d'un tel système 82 de type "multiposte", le système 82 comporte au moins deux modules 84 qui sont séparés et qui sont agencés chacun dans une zone déterminée d'intervention de la machine.

Avantageusement, un module 84 du système 82 est agencé dans l'une des zones d'intervention de la machine 10 parmi une première zone Z1 latérale droite ou une deuxième zone Z2 latérale gauche ou une troisième zone Z3 arrière de la machine 10, laquelle troisième zone Z3 est diamétralement opposée auxdites zones Zi et Ze de la partie avant de la machine, tandis qu'au moins un autre module 84 est agencé dans l'une de ces zones Z1 ou Z2 ou Z3 pour autant qu'elle n'en comporte pas déjà.

Avantageusement, il est prévu dans l'enceinte 31 des portes d'accès auxdites zones Z1, Z2 ou Z3 d'intervention qui ont été matérialisées par des hachures sur la figure 1 pour les rendre visibles.

Avantageusement, lesdites zones Z1, Z2 et Z3 sont des zones dans lesquelles les unités 24 de moulage sont en position fermée lorsque la machine 10 fonctionne en mode de production de récipient 14'.

De ce fait, l'ensemble de ces zones est avantageusement dépourvu des moyens de guidage, tels qu'une came, destinés à coopérer avec ledit au moins un galet 44 solidaire du bras 42 et formant avec ce dernier, pour chaque unité 24 de moulage, ledit organe 48 de commande de son dispositif 46 d'ouverture/fermeture.

En l'absence de tels moyens de guidage, l'organe 48 de commande du dispositif 46 d'ouverture/fermeture de chaque unité 24 de moulage est dans lesdites zones Z1 à Z3 totalement libre de mouvement de sorte que ledit organe 48 ne s'oppose alors nullement à l'actionnement de l'organe 52 de commande par l'organe 88 de manoeuvre pour provoquer la rotation des porte-moules 26 entre lesdites positions ouverte et fermée, ladite rotation s'effectuant autour de l'axe O de rotation.

De préférence, les modules 84 sont alors commandés pour réaliser de manière synchrone ledit cycle de changement de moule.

De préférence, une unité de commande du système 82 commande alors simultanément chacun des modules 84 de manière à synchroniser chaque dispositif 86 d'actionnement lors de la mise en oeuvre d'un cycle de changement de moule, notamment pour commander en synchronisation les premiers et les deuxièmes moyens 92 et 94 d'entraînement de chaque module 84.

Grâce à quoi, pour une durée égale et correspondant à un cycle complet de changement de moule, on double au minimum le nombre d'unités 24 de moulage traitées ou, dit encore autrement, on réduit au moins par deux le temps total requis pour changer les moules d'une machine 10.

Avantageusement, l'unité de commande du système 82 commande lesdits modules 84 simultanément pour que chacun effectue complètement ledit cycle de changement de moule sans qu'un changement des positions de référence déterminées des unités 24 de moulage associées n'intervienne.

En variante, l'unité de commande du système 82 commande lesdits modules 84 successivement, soit avec un décalage temporel déterminé entre eux soit l'un après l'autre, de manière que chacun effectue complètement ledit cycle de changement de moule sans que n'intervienne de changement de position des unités 24 de moulage.

Selon une deuxième conception de réalisation d'un tel système 82 de type "multiposte", le système 82 comporte au moins deux modules 84 qui sont regroupés, notamment pour en faciliter la commande en synchronisation et pour mutualiser certains des moyens entre au moins deux modules 84.

On décrira maintenant un deuxième mode de réalisation d'un système 82 d'assistance au changement de moule selon l'invention qui est principalement caractérisé par le fait que ledit système 82 comporte deux modules 84.

Le système 82 selon ce deuxième mode de réalisation sera décrit ci-après par comparaison avec le premier mode de réalisation et en référence aux figures 7 et 8.

En effet et tel qu'illustré sur les figures 7 et 8, le système 82 selon ce deuxième mode de réalisation comporte deux modules, respectivement un premier module 841 et un deuxième module 842, qui sont chacun analogue au module 84 représenté à la figure 5 et décrit précédemment.

Avantageusement, les mêmes références ont donc été utilisées pour désigner les éléments identiques de chacun des modules 841, 842.

Selon ce deuxième mode de réalisation, le système 82 comporte au moins deux modules 841, 842 juxtaposés.

Avantageusement, lesdits modules 841, 842 juxtaposés du système 82 sont agencés dans une zone déterminée de la machine, dite zone d'intervention.

De préférence, ladite zone d'intervention déterminée de la machine 10 est choisie parmi la première zone Z1 latérale droite ou une deuxième zone Z2 latérale gauche ou une troisième zone Z3 arrière de la machine 10.

Avantageusement, le système 82 comporte des premiers moyens 110 de liaison qui lient en déplacement les organes 88 de manoeuvre des deux modules 841, 842 dont les premiers moyens 92 d'entraînement communs agissent sur lesdits premiers moyens 110 de liaison.

De préférence, les premiers moyens 110 de liaison sont réalisés sous la forme d'une structure aux extrémités transversales de laquelle sont liés les pivots 100 de chacun des modules 841, 842.

Ladite structure formant les premiers moyens 110 de liaison est ici reliée centralement à un socle 102 qui est commun aux modules 841, 842 et est apte à être actionnée par les premiers moyens 92 d'entraînement communs pour en provoquer le déplacement en translation selon la direction verticale entre les positions P0, P1 et P2 respectivement.

Avantageusement, les premiers moyens 92 d'entraînement sont mutualisés entre lesdits modules 841, 842.

Grâce à l'entraînement simultané des organes 88 de manoeuvre par lesdits premiers moyens 92 d'entraînement commun et aux premiers moyens 110 de liaison, le déplacement des organes 88 de manoeuvre des modules 841, 842 sont synchronisés, notamment le déplacement en translation desdits organes 88 de manoeuvre entre les première et deuxième positions P1, P2, correspondant aux positions verrouillée et déverrouillée.

Avantageusement, le système 82 comporte des deuxièmes moyens 112 de liaison qui lient en déplacement lesdits organes 88 de manoeuvre desdits au moins deux modules 841 et 842 dont les deuxièmes moyens 94 d'entraînement communs sont aptes à agir sur lesdits deuxièmes moyens 112 de liaison.

De préférence, les deuxièmes moyens 112 de liaison sont réalisés sous la forme d'une barre qui relie entre elles les parties de support 96 de l'organe 88 de manoeuvre de chaque module 841, 842.

La barre comporte une extrémité qui est reliée par une liaison 114 pivotante à la branche 96B de la partie de support 96 de l'organe 88 de manoeuvre du module 841 et une autre extrémité qui est reliée par une liaison 116 pivotante à la branche 96B de la partie de support 96 de l'organe 88 de manoeuvre du module 842.

Grâce aux deuxièmes moyens 112 de liaison, les organes 88 de manoeuvre sont liés en déplacement par l'intermédiaire de leurs parties de support 96 qui sont respectivement montées mobiles en rotation autour d'un axe A de rotation d'un pivot 100 porté par les premiers moyens 110 de liaison.

De préférence, les deuxièmes moyens 112 de liaison sont de longueur variable ou apte à être démontée aisément pour être remplacé par une autre barre de longueur différente déterminée en fonction du pas séparant les unités 24 de moulage traitées selon le cycle de changement de moule par les modules 841 et 842 juxtaposés du système 82.

Avantageusement, les deuxièmes moyens 94 d'entraînement sont également agencés transversalement entre lesdites parties de support 96 des organes 88 de manoeuvre de chacun des modules 841, 842 et sont mutualisés entre lesdits modules 841 et 842.

Grâce aux deuxièmes moyens 112 de liaison, lesdits deuxièmes moyens 94 d'entraînement commun entraînent simultanément en déplacement les organes 88 de manoeuvre des modules 841 et 842, notamment synchronisent les déplacements entre les deuxième et troisième positions P2, P3 correspondant aux positions ouverte et fermée, et cela indépendamment de la position P0, P1 ou P2 occupée par chaque organe 88 de manoeuvre.

En variante, le système 82 comporte des premiers moyens 110 de liaison qui lient en déplacement les organes 88 de manoeuvre des deux modules 841, 842 mais dont les premiers moyens 92 d'entraînement distincts sont aptes à agir sélectivement sur l'organe 88 de manoeuvre de chacun desdits modules 841, 842.

Grâce à quoi, l'organe 88 de manoeuvre de chaque module 84 est apte à être commandé sélectivement en déplacement, indépendamment de l'organe 88 de manoeuvre de tout autre module(s) 84.

Avantageusement, les organes 88 de manoeuvre sont notamment susceptibles d'être déplacés simultanément mais encore aussi successivement en translation entre les positions P0, P1 et P2 selon la commande des premiers moyens 92 d'entraînement de chaque module 841, 842 par l'unité de commande du système 82.

Avantageusement, le système 82 comporte au moins deux modules 841, 842 qui sont commandés par ladite unité de commande pour effectuer chacun ledit cycle de changement de moule sans changement des positions de référence déterminées des unités de moulage associées.

On décrira maintenant plus particulièrement le fonctionnement d'un système 82 selon le deuxième mode de réalisation par comparaison avec le premier mode de réalisation.

Le cycle de changement de moule assisté par le système 82 comportant au moins les modules 841 et 842 est identique en ce qu'il comporte au moins :
- une première phase de cycle au cours de laquelle chaque organe 88 de manoeuvre du dispositif 86 d'actionnement de l'un et l'autre des modules 841, 842 est successivement déplacé de la première position P1 à la deuxième position P2 puis de ladite deuxième position P2 à la troisième position P3, et
- une deuxième phase de cycle au cours de laquelle chaque organe 88 de manoeuvre du dispositif 86 d'actionnement de l'un et l'autre des modules 841, 842 est successivement déplacé de la troisième position P3 à la deuxième position P2 puis de ladite deuxième position P2 à la première position P1.

Dans ce deuxième mode de réalisation, l'unité de commande du système 82 commande simultanément les moyens 92, 94 d'entraînement de manière que l'organe 88 de manoeuvre de chaque module 841 et 842 effectue ledit cycle de changement de moule.

Tel que décrit précédemment en référence à la figure 6A, la première phase du cycle de changement de moule commandée par l'unité de commande du système 82 comporte les différentes étapes suivantes.

La machine 10 est commandée par l'unité de contrôle pour amener les unités 24 de moulage en position de référence déterminée par rapport au système 82 et aux modules 841, 842.

Selon la première étape (a), l'unité de commande du système 82 commande lesdits modules 841, 842 pour amener le système 82 de l'état de veille à l'état d'utilisation correspondant au mode de fonctionnement, dit d'intervention, de la machine 10.

Pour ce faire, les premiers moyens 92 d'entraînement communs auxdits modules 841, 842 sont commandés par l'unité de commande de manière que la tige 98 d'actionnement coulisse et sollicite la structure formant les premiers moyens 110 de liaison.

Les premiers moyens 110 de liaison portant les parties de support 96 de chaque organe 88 de manoeuvre coulissent alors verticalement vers le haut par rapport au socle102 et cela suivant une première course donnée correspondant à la translation des organes 88 de manoeuvre de la position escamotée P0 jusqu'à la première position P1.

Selon la deuxième étape (b), l'unité de commande poursuit la commande des premiers moyens 92 d'entraînement commun auxdits modules 841 , 842 pour en faire coulisser verticalement vers le haut la tige 98 d'actionnement liée aux premiers moyens 110 de liaison.

Ce faisant, les organes 88 de manoeuvre sont alors déplacés, selon une deuxième course, de la première position P1 à la deuxième position P2 pour que chacun actionne l'organe 52 de commande des moyens 55 de verrouillage de l'unité 24 de moulage qui lui est associée et provoque ainsi le déverrouillage du dispositif 50 de verrouillage de ladite unité 24 de moulage qui est dès lors libre d'être ouverte.

Selon la troisième étape (c), l'unité de commande du système 82 commande les deuxièmes moyens 94 d'entraînement communs pour en déplacer en coulissement la tige 104 d'actionnement qui sollicite alors l'organe 88 de manoeuvre du module 841 avec un effort d'ouverture propre à provoquer le pivotement autour de l'axe A de rotation déterminé par le pivot 100 depuis la deuxième position P2 jusqu'à la troisième position P3 associée à la position ouverte de l'unité 24 de moulage.

L'effort d'ouverture est appliqué, au niveau de la liaison 106, par la tige 104 d'actionnement à la branche 96B de la partie de support 96 de l'organe 88 de manoeuvre du module 841, l'autre extrémité de la tige 104 étant libre de pivoter par la liaison 108 pivotante autour de l'axe A du pivot 100 de l'autre module 842.

Grâce aux deuxièmes moyens 112 de liaison, la rotation de chacune des parties de support 96 portant les organes 88 de manoeuvre est synchronisée et s'effectue simultanément pour les deux modules 841 et 842 du système 82.

Une fois la position ouverte atteinte, au moins un opérateur mais de préférence deux opérateurs sont alors susceptibles d'intervenir pour procéder au démontage puis au montage des éléments 28 de moulage de chaque unité 24 de moulage.

Comme précédemment, le cycle de changement de moule se poursuit ensuite par une deuxième phase comportant les quatrième, cinquième et sixième étapes (d) à (f) correspondant respectivement aux déplacements en sens inverse par rapport aux étapes (c), (b) et (a) de la première phase du cycle.

Lorsque le cycle de changement de moule est-achevé, on a alors traité dans le même laps de temps que précédemment le changement de moule de deux unités 24 de moulage et non d'une seule.

La machine 10 est alors mise en rotation par l'unité de contrôle en commandant les moyens d'entraînement pour amener une nouvelle paire d'unités 24 de moulage dans ladite position de référence déterminée de manière à répéter simultanément pour chacune d'elle ledit cycle de changement de moule qui vient d'être décrit.

Avantageusement, le système 82 comporte donc au moins deux modules 841, 842 qui sont commandés simultanément par ladite unité de commande pour effectuer chacun complètement ledit cycle de changement de moule et cela sans qu'il ne soit procédé pendant la durée du cycle à aucun changement de la position de référence déterminée de chacune des unités 24 de moulage associées aux modules 841, 842.

En variante, l'unité de commande du système 82 commande successivement les moyens 92, 94 d'entraînement de manière que les organes 88 de manoeuvre de chacun des modules 841, 842 effectuent ledit cycle de changement de moule l'un après l'autre.

Une telle variante est en particulier mise en oeuvre lorsque l'espace entre deux unités 24 de moulage consécutives est tel qu'il n'est pas possible que les deux unités 24 de moulage occupent simultanément la position ouverte permettant de procéder au démontage et au montage des éléments 28 de moulage.

On décrira maintenant, par comparaison et en référence à la figure 9, un troisième mode de réalisation du système 82 d'assistance au changement de moule selon l'invention.

De préférence, la description qui suit de ce troisième mode de réalisation est effectuée dans l'hypothèse où l'espace entre deux unités 24 de moulage consécutives, c'est-à-dire le pas, est insuffisant pour permettre l'ouverture simultanée de deux unités 24 de moulage consécutives.

Par conséquent, au moins une partie des organes 88 de manoeuvre des dispositif 86 d'actionnement des modules 84 est commandée par l'unité de commande du système pour effectuer ledit cycle de changements de moule puis une fois celui-ci achevé, et alors seulement, l'autre partie restante des organes 88 de manoeuvre est commandée pour effectuer également ledit cycle de changement de moule.

Avantageusement, les deux cycles de changement de moule sont réalisés successivement, l'un après l'autre sans que les unités 24 de moulage ne soient déplacées de leur position de référence déterminée avant l'achèvement desdits cycles.

Tel qu'illustré à la figure 9, le système 82 comporte au moins quatre modules juxtaposés qui sont respectivement référencés 841, 842, 843 et 844.

Avantageusement, le système 82 comporte au moins :
- un premier groupe de modules comportant au moins le premier module 841 et le troisième module 843 entre lesquels un deuxième module 842 est interposé, et
- un deuxième groupe de modules comportant au moins ledit deuxième module 842 et un quatrième module 844 entre lesquels le troisième module 843 est interposé.

Avantageusement, le système 82 selon ce troisième mode de réalisation comporte encore des deuxièmes moyens 112 de liaison qui lient en déplacement lesdits parties de support 96 des organes 88 de manoeuvre desdits modules 841, 842, 843 et 844, les deuxièmes moyens 94 d'entraînement communs étant mutualisés entre les quatre modules et aptes à agir sur lesdits deuxièmes moyens 112 de liaison.

Les deuxièmes moyens 112 de liaison synchronisent donc le déplacement en rotation des organes 88 de manoeuvre des quatre modules.

C'est la raison pour laquelle, chacun des quatre modules 841, 842, 843 et 844 du système 82 comporte avantageusement des premiers moyens 92 d'entraînement de l'organe 88 de manoeuvre dudit module afin de commander sélectivement le déplacement de chaque organe 88 de manoeuvre, notamment entre lesdites première et deuxième positions P1 et P2 mais également en position escamotée P0.

Comme on peut le voir sur la figure 9, lorsque le premier groupe comportant les modules 841 et 843 effectue le premier cycle de changement de moule, les organes 88 de manoeuvre des modules 842 et 844 du deuxième groupe sont alors maintenus en position escamotée P0 de sorte qu'aucun des organes 88 de manoeuvre de ce deuxième groupe n'est susceptible d'entrer en contact avec un autre élément, tel que les organes 52 de commande des moyens 55 de verrouillage.

De la même manière, lorsque le deuxième groupe comportant les modules 842 et 844 effectue le premier cycle de changement de moule, les organes 88 de manoeuvre des modules 841 et 843 du deuxième groupe sont aussi en position escamotée P0 de manière à éviter toute interférence lors de la rotation simultanée autour des axes A de rotation des pivots 100 des quatre modules 841, 842, 843 et 844.

Avantageusement, l'unité de commande du système 82 est apte à commander lesdits modules par groupe de manière que les modules de chaque groupe réalisent successivement l'un après l'autre un cycle de changement de moule complet.

Au cours du premier cycle, le système 82 traite un premier ensemble d'au moins deux unités 24 de moulage associées aux modules 841, 843 du premier groupe puis au cours du deuxième cycle, le système 82 traite un deuxième ensemble d'au moins deux unités 24 de moulage associées aux modules 842, 844 du deuxième groupe, chacun des quatre unités 24 de moulage occupant ladite position de référence déterminée lors de la mise en oeuvre de ces deux cycles.

Toutefois selon une variante non représentée, lorsque le nombre d'unités 24 de moulage de la machine 10 est tel que l'ouverture de deux unités 24 de moulage adjacentes est possible, alors la mise en oeuvre du cycle de changement de moule est similaire à celle décrite précédemment pour le deuxième mode.

En effet, l'unité de commande du système 82 commande alors simultanément les quatre modules 841, 842, 843 et 844 comportant avantageusement au moins des deuxièmes moyens 94 d'entraînement mutuatisés et synchronisés en déplacement par des deuxièmes moyens 112 de liaison.

Avantageusement, lorsque les premiers moyens 92 d'entraînement ne sont pas mutualisés entre les quatre modules, le système est alors plus polyvalent en ce qu'il est indifféremment à même de traiter quatre unités 24 de moulage, soit simultanément, soit successivement deux par deux.

En variante, les premiers moyens 92 d'entraînement sont mutualisés entre au moins deux modules 84.

On comprendra que dans une telle variante, les quatre unités 24 de moulage associées sont alors traitées simultanément au cours d'une durée correspondant à un seul cycle de changement de moule.

Grâce à quoi, avec un tel système 82, il faut par exemple deux fois moins de temps qu'avec un système selon le deuxième mode pour changer les éléments 28 de moulage des unités 24 de moulage ou encore quatre fois moins qu'avec un système 82 à un module selon le premier mode de réalisation.

Bien entendu, l'utilisation d'un système 82 selon l'invention n'est nullement limitée à une telle machine 10 de type rotative illustrée à la figure 1, pas plus qu'au changement de moule d'une unité 24 de moulage de type portefeuille.

En effet, sans sortir du cadre de l'invention, ledit système d'assistance au changement de moule pourrait également être utilisé avec des machines 10 dites de type linéaire, c'est à dire comportant au moins une unité 24 de moulage dont lés porte-moules 26 sont montés mobiles en translation (et non en rotation) entre des positions ouverte et fermée.

En variante, l'organe de manoeuvre est donc par exemple apte à être déplacé en translation entre au moins lesdites deuxième et troisième positions par des deuxièmes moyens d'entraînement pour commander l'ouverture/fermeture des porté-moules d'une unité de moulage.

Tout particulièrement, un tel système 82 est apte à actionner de nombreux dispositifs de verrouillage entre lesdites positions verrouillée et déverrouillée et le dispositif 50 de verrouillage décrit et représenté à la figure 4 n'est qu'un exemple donné uniquement à titre non limitatif.

On se reportera par exemple aux documents de l'état de la technique FR-A1-2.646.802, FR-2.856.334 ou FR-2.863.930 qui illustrent d'autres conceptions de dispositif 50 de verrouillage.

Bien entendu, la cinématique de l'organe 88 de commande du au moins un module 84 que comporte le système 82 selon les modes de réalisation est avantageusement adaptée au dispositif de verrouillage comportant des moyens de verrouillage dont il doit commander le déplacement entre les positions verrouillée et déverrouillée.

En variante, l'organe de manoeuvre est apte à être déplacé en translation dans un plan horizontal et non vertical pour actionner un organe de commande du dispositif de verrouillage et déplacé directement ou indirectement les moyens de verrouillage entre lesdites positions verrouillée et déverrouillée.

De nombreuses autres variantes sont envisageables, en particulier avec la mise en oeuvre de mécanisme de transformation ou de renvoi de mouvement, l'organe de manoeuvre est par exemple déplacé en translation pour solliciter l'extrémité libre d'un levier solidaire d'un organe de commande des moyens de verrouillage monté mobile en rotation.

En variante, l'organe de manoeuvre est par exemple apte à être déplacé en rotation pour commander le déverrouillage et le verrouillage.

## Revendications

1. Machine (10) de fabrication de récipients, notamment de bouteilles en matière thermoplastique, qui comporte au moins une unité (24) de moulage comportant :
- au moins deux porte-moules (26) qui sont montés mobiles entre une position ouverte et une position fermée de l'unité (24) de moulage et un moule comportant au moins deux éléments (28) de moulage fixés chacun de manière démontable à l'un des porte-moules (26), et
- un dispositif (50) de verrouillage de l'unité (24) de moulage comportant au moins un organe (52) de commande apte à actionner des moyens (55) de verrouillage qui sont montés mobiles entre :
• une position verrouillée dans laquelle les porte-moules (26) de l'unité (24) de moulage sont maintenus en position fermée par lesdits moyens (55) de verrouillage, et
• une position déverrouillée dans laquelle les porte-moules (26) sont libres d'être déplacés entre les positions fermée et ouverte,
**caractérisée en ce que** la machine (10) comporte un système (82) d'assistance au changement de moule susceptible d'occuper au moins un état de veille associé à un mode de fonctionnement de la machine (10), dit de production, pour la fabrication de récipients par la machine, et un état d'utilisation associé à un autre mode de fonctionnement de la machine (10), dit d'intervention, pour procéder au moins au changement du moule de ladite au moins une unité (24) de moulage, ledit système (82) comportant au moins un module (84) associé à ladite au moins une unité (24) de moulage, ledit module (84) comportant un dispositif (86) d'actionnement qui comporte un organe (88) de manoeuvre destiné à coopérer avec ledit organe (52) de commande des moyens (55) de verrouillage lorsque l'unité (24) de moulage occupe une position de référence déterminée par rapport au module (84), ledit organe (88) de manoeuvre étant apte à être entraîné en déplacement afin d'actionner ledit organe (52) de commande des moyens (55) de verrouillage, d'une part, pour provoquer le déplacement des moyens (55) de verrouillage vers au moins l'une desdites positions verrouillée ou déverrouillée et, d'autre part, pour provoquer le déplacement des porte-moules (26) vers au moins l'une desdites positions ouverte ou fermée de l'unité (24) de moulage.

2. Machine selon la revendication 1, **caractérisée en ce que** le dispositif (86) d'actionnement du module (84) du système (82) comporte des premiers moyens (92) d'entraînement destinés à déplacer sélectivement l'organe (88) de manoeuvre entre au moins :
- une première position (P1) associée à la position verrouillée des moyens (55) de verrouillage de l'unité (24) de moulage, et
- une deuxième position (P2) associée à la position déverrouillée des moyens (55) de verrouillage de l'unité (24) de moulage.

3. Machine selon la revendication 2, **caractérisée en ce que** l'organe (88) de manoeuvre est apte à être déplacé en translation par lesdits premiers moyens. (92) d'entraînement au moins :
- de ladite première position (P1) dans laquelle ledit organe (88) de manoeuvre coopère avec l'organe (52) de commande des moyens (55) de verrouillage occupant la position verrouillée
- vers ladite deuxième position (P2) dans laquelle ledit organe (88) de manoeuvre exerce sur l'organe (52) de commande des moyens (55) de verrouillage un effort, dit de déverrouillage, propre à amener lesdits moyens (55) de verrouillage en position déverrouillée.

4. Machine selon la revendication 3, **caractérisée en ce que** l'organe (88) de manoeuvre est apte à être déplacé en translation par lesdits premiers moyens (92) d'entraînement au moins :
- de ladite deuxième position (P2) dans laquelle ledit organe (88) de manoeuvre coopère avec l'organe (52) de commande des moyens (55) de verrouillage occupant la position déverrouillée,
- vers ladite première, position (P1) dans laquelle ledit organe (88) de manoeuvre exerce sur l'organe (52) de commande des moyens (55) de verrouillage un effort, dit de verrouillage, propre à amener lesdits moyens (55) de verrouillage en position verrouillée.

5. Machine selon la revendication 3, **caractérisée en ce que** le dispositif (86) d'actionnement du module (84) du système (82) comporte des deuxièmes moyens (94) d'entraînement destinés à déplacer l'organe (88) de manoeuvre entre au moins :
- ladite deuxième position (P2) dans laquelle les porte-moules (26) de l'unité (24) de moulage sont en position fermée et dans laquelle les moyens (55) de verrouillage sont en position déverrouillée, et
- une troisième position (P3) dans laquelle les porte-moules (26) de l'unité (24) de moulage sont en position ouverte.

6. Machine selon la revendication 5, **caractérisée en ce que** l'organe (88) de manoeuvre est apte à être déplacé en rotation par lesdits deuxièmes moyens (94) d'entraînement au moins :
- de ladite deuxième position (P2) dans laquelle ledit organe (88) de manoeuvre sollicite l'organe (52) de commande des moyens (55) de verrouillage en position déverrouillée,
- vers une troisième position (P3) atteinte après que ledit organe (88) de manoeuvre ait appliqué à l'organe (52) de commande un effort, dit d'ouverture, propre à provoquer le déplacement d'au moins l'un des porte-moules (26) de manière que les porte-moules (26) occupent ladite position ouverte de l'unité (24) de moulage.

7. Machine, selon la revendication 6, **caractérisée en ce que** l'organe (88) de manoeuvre est apte à être déplacé en rotation par lesdits deuxièmes moyens (94) d'entraînement au moins :
- de ladite troisième position (P3),
- vers ladite deuxième position (P2) atteinte après que ledit organe (88) de manoeuvre ait appliqué à l'organe (52) de commande un effort, dit de fermeture, propre à provoquer le déplacement d'au moins l'un des porte-moules (26) de manière que les porte-moules (26) occupent ladite position fermée de l'unité (24) de moulage.

8. Machine selon l'une des revendications 6 ou 7, **caractérisée en ce que** l'organe (88) de manoeuvre du module (84) du système (82) est apte à pivoter, entre lesdites deuxième et troisième positions (P2, P3), autour d'un axe (A) de rotation qui est coaxial avec un axe (O) de rotation autour duquel l'un au moins des porte-moules (26) est monté mobile en rotation, respectivement entre lesdites positions ouverte et fermée de l'unité (24) de moulage occupant ladite position de référence déterminée par rapport au module (84).

9. Machine selon l'une quelconque des revendications 2 à 8, **caractérisée en ce que** l'organe (88) de manoeuvre du dispositif (86) d'actionnement dudit au moins un module (84) du système (82) est monté mobile entre au moins :
- une position escamotée (P0) correspondant à l'état de veille du système (82) associé au mode de fonctionnement de la machine (10), dit de production, pour la fabrication de récipients par la machine (10), et
- ladite première position (P1) correspondant à l'état d'utilisation du système (82) associé à l'autre mode de fonctionnement de la machine (10), dit d'intervention, pour procéder au moins au changement du moule d'au moins une unité (24) de moulage,
et **en ce que** les premiers moyens (92) d'entraînement d'au moins ledit organe (88) de manoeuvre constituent des moyens de commande du changement d'état du système (82) entre lesdits états de veille et d'utilisation.

10. Machine selon les revendications 2 et 5 prise en combinaison avec la revendication 9, **caractérisée en ce que** le système (82) comporte une unité de commande destinée à commander au moins un module (84), ladite unité étant apte à commander sélectivement et séquentiellement selon un cycle de changement de moule au moins lesdits premiers et deuxièmes moyens (92, 94) d'entraînement du dispositif (86) d'actionnement du module (84) du système (82) en état d'utilisation, ledit cycle comportant au moins :
- une première phase de cycle au cours de laquelle l'organe (88) de manoeuvre du dispositif (86) d'actionnement est successivement déplacé de la première position (P1) à la deuxième position (P2) puis de ladite deuxième position (P2) à la troisième position (P3), et
- une deuxième phase de cycle au cours de laquelle l'organe (88) de manoeuvre du dispositif (86) d'actionnement est successivement déplacé de la troisième position (P3) à la deuxième position (P2) puis de ladite deuxième position (P2) à la première position (P1).

11. Machine selon l'une quelconque des revendications précédentes, **caractérisée en ce que** le système (82) comporte au moins deux modules (84) juxtaposés et agencés dans une zone (Z1, Z2, Z3) déterminée de la machine (10), dite zone d'intervention.

12. Machine selon l'une quelconque des revendications 1 à 10, **caractérisée en ce que** le système (82) comporte au moins deux modules (84) séparés et agencés chacun dans une zone (Z1, Z2, Z3) déterminée d'intervention de la machine.

13. Machine selon la revendication 11, **caractérisée en ce que** le système (82) comporte respectivement :
- des premiers moyens (110) de liaison qui lient en déplacement les organes (88) de manoeuvre d'au moins deux modules (84) dont les premiers moyens (92) d'entraînement communs agissent sur lesdits premiers moyens (110) de liaison, et
- des deuxièmes moyens (112) de liaison qui lient en déplacement lesdits organes (88) de manoeuvre desdits au moins deux modules (84) dont les deuxièmes moyens (94) d'entraînement communs sont aptes à agir sur lesdits deuxièmes moyens (112) de liaison.

14. Machine selon la revendication 11, **caractérisée en ce que** le système (82) comporte respectivement :
- des premiers moyens (110) de liaison qui lient en déplacement les organes (88) dé manoeuvre d'au moins deux modules (84) dont les premiers moyens (92) d'entraînement distincts sont aptes à agir sélectivement sur l'organe (88) de manoeuvre de chacun desdits modules (84), et
- des deuxièmes moyens (112) de liaison qui lient en déplacement lesdits organes (88) de manoeuvre desdits au moins deux modules (84) dont les deuxièmes moyens (94) d'entraînement communs agissent sur lesdits deuxièmes moyens (112) de liaison.

15. Machine selon la revendication 10, **caractérisée en ce que** le système (82) d'assistance au changement de moule comporte au moins deux modules (84) qui sont commandés par ladite unité de commande pour effectuer chacun ledit cycle de changement de moule sans changement des positions de référence déterminées des unités (24) de moulage associées.

## Patentansprüche

1. Maschine (10) zur Herstellung von Behältern, insbesondere von Flaschen aus thermoplastischem Material, die mindestens eine Formgebungseinheit (24) aufweist, die aufweist:
- mindestens zwei Formträger (26), die zwischen einer offenen Stellung und einer geschlossenen Stellung der Formgebungseinheit (24) beweglich montiert sind, und eine Form, die mindestens zwei Formgebungselemente (28) aufweist, die je ausbaubar an einem der Formträger (26) befestigt sind, und
- eine Vorrichtung (50) zur Verriegelung der Formgebungseinheit (24), die mindestens ein Steuerorgan (52) aufweist, das Verriegelungseinrichtungen (55) betätigen kann, die beweglich montiert sind zwischen:
• einer verriegelten Stellung, in der die Formträger (26) der Formgebungseinheit (24) von den Verriegelungseinrichtungen (55) in geschlossener Stellung gehalten werden, und
• einer entriegelten Stellung, in der die Formträger (26) frei zwischen der geschlossenen und der offenen Stellung verschoben werden können,
**dadurch gekennzeichnet, dass** die Maschine (10) ein Formwechsel-Hilfssystem (82) aufweist, das mindestens einen Standby-Zustand, der einer so genannten Produktions-Betriebsart der Maschine (10) zur Herstellung von Behältern durch die Maschine zugeordnet ist, und einen Benutzungszustand einnehmen kann, der einer anderen so genannten Eingriffs-Betriebsart der Maschine (10) zugeordnet ist, um mindestens den Wechsel der Form der mindestens einen Formgebungseinheit (24) durchzuführen, wobei das System (82) mindestens ein Modul (84) aufweist, das der mindestens einen Formgebungseinheit (24) zugeordnet ist, wobei das Modul (84) eine Betätigungsvorrichtung (86) aufweist, die ein Bedienungsorgan (88) aufweist, das dazu bestimmt ist, mit dem Steuerorgan (52) der Verriegelungseinrichtungen (55) zusammenzuwirken, wenn die Formgebungseinheit (24) eine bestimmte Bezugsstellung bezüglich des Moduls (84) einnimmt, wobei das Bedienungsorgan (88) verschoben werden kann, um das Steuerorgan (52) der Verriegelungseinrichtungen (55) zu betätigen, um einerseits die Verschiebung der Verriegelungseinrichtungen (55) zu mindestens einer der verriegelten oder entriegelten Stellungen hervorzurufen, und andererseits die Verschiebung der Formträger (26) zu mindestens einer der offenen oder geschlossenen Stellungen der Formgebungseinheit (24) hervorzurufen.

2. Maschine nach Anspruch 1, **dadurch gekennzeichnet, dass** die Betätigungsvorrichtung (86) des Moduls (84) des Systems (82) erste Antriebseinrichtungen (92) aufweist, die dazu bestimmt sind, das Bedienungsorgan (88) selektiv zu verschieben zwischen mindestens:
- einer ersten Stellung (P1), die der verriegelten Stellung der Verriegelungseinrichtungen (55) der Formgebungseinheit (24) zugeordnet ist, und
- einer zweiten Stellung (P2), die der entriegelten Stellung der Verriegelungseinrichtungen (55) der Formgebungseinheit (24) zugeordnet is.

3. Maschine nach Anspruch 2, **dadurch gekennzeichnet, dass** das Bedienungsorgan (88) von den ersten Antriebseinrichtungen (92) mindestens translationsverschoben werden kann:
- von der ersten Stellung (P1), in der das Bedienungsorgan (88) mit dem Steuerorgan (52) der Verriegelungseinrichtungen (55) zusammenwirkt, die die verriegelte Stellung einnehmen,
- in die zweite Stellung (P2), in der das Bedienungsorgan (88) auf das Steuerorgan (52) der Verriegelungseinrichtungen (55) eine so genannte Entriegelungskraft ausübt, die die Verriegelungseinrichtungen (55) in die entriegelte Stellung bringen kann.

4. Maschine nach Anspruch 3, **dadurch gekennzeichnet, dass** das Bedienungsorgan (88) von den ersten Antriebseinrichtungen (92) mindestens translationsverschoben werden kann:
- von der zweiten Stellung (P2), in der das Bedienungsorgan (88) mit dem Steuerorgan (52) der Verriegelungseinrichtungen (55) zusammenwirkt, die die entriegelte Stellung einnehmen,
- in die erste Stellung (P1), in der das Bedienungsorgan (88) auf das Steuerorgan (52) der Verriegelungseinrichtungen (55) eine so genannten Verriegelungskraft ausübt, die die Verriegelungseinrichtungen (55) in die verriegelte Stellung bringen kann.

5. Maschine nach Anspruch 3, **dadurch gekennzeichnet, dass** die Betätigungsvorrichtung (86) des Moduls (84) des Systems (82) zweite Antriebseinrichtungen (94) aufweist, die dazu bestimmt sind, das Bedienungsorgan (88) zu verschieben zwischen mindestens:
- der zweiten Stellung (P2), in der die Formträger (26) der Formgebungseinheit (24) in geschlossener Stellung sind und in der die Verriegelungseinrichtungen (55) in entriegelter Stellung sind, und
- einer dritten Stellung (P3), in der die Formträger (26) der Formgebungseinheit (24) in offener Stellung sind.

6. Maschine nach Anspruch 5, **dadurch gekennzeichnet, dass** das Bedienungsorgan (88) von den zweiten Antriebseinrichtungen (94) mindestens in Drehung verschoben werden kann:
- von der zweiten Stellung (P2), in der das Bedienungsorgan (88) das Steuerorgan (52) der Verriegelungseinrichtungen (55) in die entriegelte Stellung beaufschlagt,
- in eine dritte Stellung (P3), die erreicht wird, nachdem das Bedienungsorgan (88) auf das Steuerorgan (52) eine so genannte Öffnungskraft angewendet hat, die die Verschiebung mindestens eines der Formträger (26) hervorrufen kann, so dass die Formträger (26) die offene Stellung der Formgebungseinheit (24) einnehmen.

7. Maschine nach Anspruch 6, **dadurch gekennzeichnet, dass** das Bedienungsorgan (88) von den zweiten Antriebseinrichtungen (94) mindestens in Drehung verschoben werden kann:
- von der dritten Stellung (P3)
- in die zweite Stellung (P2), die erreicht wird, nachdem das Bedienungsorgan (88) eine so genannte Schließkraft auf das Steuerorgan (52) angewendet hat, die die Verschiebung mindestens eines der Formträger (26) hervorrufen kann, so dass die Formträger (26) die geschlossene Stellung der Formgebungseinheit (24) einnehmen.

8. Maschine nach einem der Ansprüche 6 oder 7, **dadurch gekennzeichnet, dass** das Bedienungsorgan (88) des Moduls (84) des Systems (82) zwischen der zweiten und der dritten Stellung (P2, P3) um eine Drehachse (A), die mit einer Drehachse (0) koaxial ist, um die mindestens einer der Formträger (26) drehbeweglich montiert ist, zwischen der offenen und der geschlossenen Stellung der die bezüglich des Moduls (84) bestimmte Bezugsstellung einnehmenden Formgebungseinheit (24) schwenken kann.

9. Maschine nach einem der Ansprüche 2 bis 8, **dadurch gekennzeichnet, dass** das Bedienungsorgan (88) der Betätigungsvorrichtung (86) des mindestens einen Moduls (84) des Systems (82) beweglich montiert ist zwischen mindestens:
- einer eingezogenen Stellung (P0), die dem Standby-Zustand des Systems (82) entspricht, der der so genannten Produktions-Betriebsart der Maschine (10) für die Herstellung von Behältern durch die Maschine (10) zugeordnet ist, und
- der ersten Stellung (P1), die dem Benutzungszustand des Systems (82) entspricht, der der anderen so genannten Eingriffs-Betriebsart der Maschine (10) zur Durchführung des Wechsels der Form mindestens einer Formgebungseinheit (24) zugeordnet ist,
und dass die ersten Antriebseinrichtungen (92) mindestens des Bedienungsorgans (88) Steuereinrichtungen der Zustandsänderung des Systems (82) zwischen dem Standby- und dem Benutzungszustand bilden.

10. Maschine nach den Ansprüchen 2 und 5 in Kombination mit Anspruch 9, **dadurch gekennzeichnet, dass** das System (82) eine Steuereinheit aufweist, die dazu bestimmt ist, mindestens ein Modul (84) zu steuern, wobei die Einheit selektiv und sequentiell gemäß einem Formwechselzyklus mindestens die ersten und zweiten Antriebseinrichtungen (92, 94) der Betätigungsvorrichtung (86) des Moduls (84) des Systems (82) im Benutzungszustand steuern kann, wobei der Zyklus mindestens aufweist:
- eine erste Zyklusphase, während der das Bedienungsorgan (88) der Betätigungsvorrichtung (86) nacheinander von der ersten Stellung (P1) in die zweite Stellung (P2) und dann von der zweiten Stellung (P2) in die dritte Stellung (P3) verschoben wird; und
- eine zweite Zyklusphase, während der das Bedienungsorgan (88) der Betätigungsvorrichtung (86) nacheinander von der dritten Stellung (P3) in die zweite Stellung (P2) und dann von der zweiten Stellung (P2) in die erste Stellung (P1) verschoben wird.

11. Maschine nach einem der vorhergehenden Ansprüche, **dadurch gekennzeichnet, dass** das System (82) mindestens zwei Module (84) aufweist, die nebeneinander angeordnet und in einer bestimmten Zone (Z1, Z2, Z3) der Maschine (10), Eingriffszone genannt, eingerichtet sind.

12. Maschine nach einem der Ansprüche 1 bis 10, **dadurch gekennzeichnet, dass** das System (82) mindestens zwei Module (84) aufweist, die getrennt und je in einer bestimmten Eingriffszone (Z1, Z2, Z3) der Maschine eingerichtet sind.

13. Maschine nach Anspruch 11, **dadurch gekennzeichnet, dass** das System (82) jeweils aufweist:
- erste Verbindungseinrichtungen (110), die die Bedienungsorgane (88) von mindestens zwei Modulen (84) in Verschiebung verbinden, deren erste gemeinsame Antriebseinrichtungen (92) auf die ersten Verbindungseinrichtungen (110) einwirken, und
- zweite Verbindungseinrichtungen (112), die die Bedienungsorgane (88) der mindestens zwei Module (84) in Verschiebung verbinden, deren zweite gemeinsame Antriebseinrichtungen (94) auf die zweiten Verbindungseinrichtungen (112) einwirken können.

14. Maschine nach Anspruch 11, **dadurch gekennzeichnet, dass** das System (82) jeweils aufweist:
- erste Verbindungseinrichtungen (110), die die Bedienungsorgane (88) von mindestens zwei Modulen (84) in Verschiebung verbinden, deren erste getrennte Antriebseinrichtungen (92) selektiv auf das Bedienungsorgan (88) jedes der Module (84) einwirken können, und
- zweite Verbindungseinrichtungen (112), die die Bedienungsorgane (88) der mindestens zwei Module (84) in Verschiebung verbinden, deren zweite gemeinsame Antriebseinrichtungen (94) auf die zweiten Verbindungseinrichtungen (112) einwirken.

15. Maschine nach Anspruch 10, **dadurch gekennzeichnet, dass** das Formwechsel-Hilfssystem (82) mindestens zwei Module (84) aufweist, die von der Steuereinheit gesteuert werden, um je den Formwechselzyklus ohne Änderung der bestimmten Bezugsstellungen der zugeordneten Formgebungseinheiten (24) auszuführen.

## Claims

1. A machine (10) for manufacturing containers, notably bottles of thermoplastic material, which includes at least one molding unit (24) including:
- at least two mold holders (26) which are mounted movably between an open position and a closed position of the molding unit (24), and a mold including at least two molding elements (28), each of which is fixed removably to one of the mold holders (26), and
- a locking device (50) of the molding unit (24) including at least one control member (52) capable of actuating locking means (55) which are mounted movably between:
• a locked position in which the mold holders (26) of the molding unit (24) are kept in the closed position by said locking means (55), and
• an unlocked position in which the mold holders (26) are freely movable between the closed and open positions,
**characterized in that** the machine (10) includes a system (82) for providing assistance when changing molds, which can be in at least a standby state associated with an operating mode of the machine (10) called the production mode, for manufacturing containers by means of the machine, and a state of use associated with another operating mode of the machine (10), called the intervention mode, for the purpose of at least changing the mold of said at least one molding unit (24), said system (82) including at least one module (84) associated with said at least one molding unit (24), said module (84) including an actuating device (86) which includes an operating member (88) intended to interact with said member (52) for controlling the locking means (55) when the molding unit (24) occupies a specified reference position relative to the module (84), said operating member (88) being capable of being driven and thereby moved so as to actuate said member (52) for controlling the locking means (55) in order to cause, on the one hand, the movement of the locking means (55) toward at least one of said locked and unlocked positions and, on the other hand, the movement of the mold holders (26) toward at least one of said open and closed positions of the molding unit (24).

2. The machine as claimed in claim 1, **characterized in that** the device (86) for actuating the module (84) of the system (82) includes first drive means (92) intended to move the operating member (88) selectively between at least:
- a first position (P1) associated with the locked position of the locking means (55) of the molding unit (24), and
- a second position (P2) associated with the unlocked position of the locking means (55) of the molding unit (24).

3. The machine as claimed in claim 2, **characterized in that** the operating member (88) can be moved in translation by said first drive means (92), at least:
- from said first position (P1) in which said operating member (88) interacts with the member (52) for controlling the locking means (55) occupying the locked position,
- toward said second position (P2) in which said operating member (88) exerts a force, called the unlocking force, on the member (52) for controlling the locking means (55), such that said locking means (55) are brought to the unlocked position.

4. The machine as claimed in claim 3, **characterized in that** the operating member (88) can be moved in translation by said first drive means (92), at least:
- from said second position (P2) in which said operating member (88) interacts with the member (52) for controlling the locking means (55) occupying the unlocked position,
- toward said first position (P1) in which said operating member (88) exerts a force, called the locking force, on the member (52) for controlling the locking means (55), such that said locking means (55) are brought to the locked position.

5. The machine as claimed in claim 3, **characterized in that** the device (86) for actuating the module (84) of the system (82) includes second drive means (94) intended to move the operating member (88) between at least:
- said second position (P2) in which the mold holders (26) of the molding unit (24) are in the closed position and in which the locking means (55) are in the unlocked position, and
- a third position (P3) in which the mold holders (26) of the molding unit (24) are in the open position.

6. The machine as claimed in claim 5, **characterized in that** the operating member (88) can be moved in rotation by said second drive means (94), at least:
- from said second position (P2) in which said operating member (88) pushes the member (52) for controlling the locking means (55) into the unlocked position,
- toward a third position (P3), reached after said operating member (88) has exerted a force, called the opening force, on the control member (52), such that at least one of the mold holders (26) is made to move in such a way that the mold holders (26) occupy said open position of the molding unit (24).

7. The machine as claimed in claim 6, **characterized in that** the operating member (88) can be moved in rotation by said second drive means (94), at least:
- from said third position (P3),
- toward said second position (P2), reached after said operating member (88) has exerted a force, called the closing force, on the control member (52), such that at least one of the mold holders (26) is made to move in such a way that the mold holders (26) occupy said closed position of the molding unit (24).

8. The machine as claimed in either of claims 6 and 7, **characterized in that** the operating member (88) of the module (84) of the system (82) is capable of pivoting, between said second and third positions (P2, P3), about an axis (A) of rotation which is coaxial with an axis (O) of rotation about which at least one of the mold holders (26) is mounted so as to be movable in rotation between said open and closed positions, respectively, of the molding unit (24) occupying said specified reference position relative to the module (84).

9. The machine as claimed in any one of claims 2 to 8, **characterized in that** the operating member (88) of the device (86) for actuating said at least one module (84) of the system (82) is mounted movably between at least:
- a retracted position (P0 corresponding to the standby state of the system (82) associated with the operating mode of the machine (10), called the production mode, for the manufacture of containers by the machine (10), and
- said first position (P1) corresponding to the state of use of the system (82) associated with the other operating mode of the machine (10), called the intervention mode, for the purpose of at least changing the mold of at least one molding unit (24),
and **in that** the first drive means (92) of at least said operating member (88) form means for controlling the change of state of the system (82) between said standby state and said state of use.

10. The machine as claimed in either of claims 2 and 5 considered in combination with claim 9, **characterized in that** the system (82) includes a control unit intended to control at least one module (84), said unit being capable of controlling selectively and sequentially, according to a mold changing cycle, at least said first and second drive means (92, 94) of the device (86) for actuating the module (84) of the system (82) in the state of use, said cycle including at least:
- a first phase of the cycle in which the operating member (88) of the actuating device (86) is successively moved from the first position (P1) to the second position (P2) and then from said second position (P2) to the third position (P3), and
- a second phase of the cycle in which the operating member (88) of the actuating device (86) is successively moved from the third position (P3) to the second position (P2) and then from said second position (P2) to the first position (P1).

11. The machine as claimed in any one of the preceding claims, **characterized in that** the system (82) includes at least two juxtaposed modules (84) arranged in a specified area (Z1, Z2, Z3) of the machine (10), called the intervention area.

12. The machine as claimed in any one of claims 1 to 10, **characterized in that** the system (82) includes at least two separate modules (84), each arranged in a specified intervention area (Z1, Z2, Z3) of the machine.

13. The machine as claimed in claim 11, **characterized in that** the system (82) includes, respectively:
- first linking means (110) which link in movement the operating members (88) of at least two modules (84) whose first common drive means (92) act on said first linking means (110), and
- second linking means (112) which link in movement said operating members (88) of said at least two modules (84) whose second common drive means (94) can act on said second linking means (112).

14. The machine as claimed in claim 11, **characterized in that** the system (82) includes, respectively:
- first linking means (110) which link in movement the operating members (88) of at least two modules (84) whose first separate drive means (92) can act selectively on the operating member (88) of each of said modules (84), and
- second linking means (112) which link in movement said operating members (88) of said at least two modules (84) whose second common drive means (94) act on said second linking means (112).

15. The machine as claimed in claim 10, **characterized in that** the system (82) for providing assistance when changing molds includes at least two modules (84) which are controlled by said control unit so that each of them executes said mold changing cycle without any change in the specified reference positions of the associated molding units (24).
